(19) Europäisches Patentamt
European Patent Office
Office européen des brevets

(11) **EP 4 043 299 B1**

(12) **EUROPEAN PATENT SPECIFICATION**

(45) Date of publication and mention
of the grant of the patent:
**14.02.2024 Bulletin 2024/07**

(21) Application number: **22156665.6**

(22) Date of filing: **14.02.2022**

(51) International Patent Classification (IPC):
**B60S 1/52** *(2006.01)*      **B60S 1/56** *(2006.01)*

(52) Cooperative Patent Classification (CPC):
**B60S 1/52; B60S 1/56**

(54) **CLEANING APPARATUS**

REINIGUNGSVORRICHTUNG

APPAREIL DE NETTOYAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2021 JP 2021021722**

(43) Date of publication of application:
**17.08.2022 Bulletin 2022/33**

(73) Proprietor: **TOYOTA JIDOSHA KABUSHIKI
KAISHA
Toyota-shi
Aichi 471-8571 (JP)**

(72) Inventors:
• **IIDA, Tomoaki**
  **TOYOTA-SHI, AICHI, 471-8571 (JP)**
• **YAMADA, Akihiro**
  **TOYOTA-SHI, AICHI, 471-8571 (JP)**
• **SADAKUNI, Yudai**
  **TOYOTA-SHI, AICHI, 471-8571 (JP)**

(74) Representative: **Cabinet Beau de Loménie
158, rue de l'Université
75340 Paris Cedex 07 (FR)**

(56) References cited:
EP-A1- 3 466 774      US-A1- 2019 003 895
US-A1- 2020 139 939      US-A1- 2020 391 702

**Description**

BACKGROUND OF THE INVENTION

Field of the invention:

The present invention relates to a cleaning apparatus for cleaning sensor surfaces of sensors mounted on a vehicle.

Description of the related art:

Conventionally, there has been known an apparatus which obtains information regarding a region around a vehicle (hereinafter referred to as the "surrounding region") by using a plurality of sensors and performs control for assisting a driver in driving the vehicle on the basis of the obtained information. In order to accurately perform such control, it is preferred that the sensor surfaces of the plurality of sensors be maintained clean. Therefore, a cleaning apparatus is mounted on the vehicle so as to jet a cleaning liquid against the sensor surfaces of the plurality of sensors, thereby cleaning the sensor surfaces. However, during a period during which the sensor surface of a certain sensor is being cleaned, the certain sensor may fail to obtain information because of jetting of the cleaning liquid against the sensor surface.

Meanwhile, a cleaning apparatus configured to feed a cleaning liquid to a plurality of jetting apparatuses (nozzles) by using a single pump has been proposed (see Japanese Patent Application Laid-Open (kokai) No. 2019-104365). In this case, since a plurality of sensors are cleaned simultaneously, even in the case where an employed configuration allows the plurality of sensors to obtain information regarding a particular area of the surrounding region of the vehicle, it may become impossible to obtain the information of that particular area during the cleaning operation. Another conceivable solution is employment of an apparatus which includes pumps in a number equal to the number of jetting apparatus, where a cleaning liquid is fed to one jetting apparatus by one pump so as to clean one sensor surface. However, such an apparatus requires a large number of relatively expensive pumps. Therefore, there arise a problem that production cost of the cleaning apparatus increases and a problem that the vehicle must have a space in which the large number of pumps are mounted.

In this context, US 2020/391702 A1 discloses a vehicle cleaning system capable of automatically cleaning a cleaning target provided to a vehicle.

EP 3 466 774 A1 discloses a fluid dispensing system, arrangement and method.

US 2019/0003895 A1 discloses a sensor pod with breathable cabin interface.

US 2020/0139939 A1 discloses a vehicle cleaner system and vehicle including vehicle cleaner system.

SUMMARY OF THE INVENTION

The present invention has been accomplished so as to solve the above-described problem, and one object of the present invention is to provide a cleaning apparatus which cleans sensor surfaces of sensors by using a cleaning fluid (for example, cleaning liquid or air) and which can reduce the possibility that cleaning operation hinders obtainment of information of a particular region (for example, front region) of a surrounding region of a vehicle, while reducing the number of components.

The invention is as defined in claim 1.

The first sensor group and the second sensor group include respective sensors which can obtain information of the first surrounding region. Namely information of the first surrounding region can be obtained by both the sensor contained in the first sensor group and the sensor contained in the second sensor group. In the cleaning apparatus according to the present invention, the control unit selectively activates the first feed mechanism for feeding the cleaning fluid to the first jetting apparatus, which cleans the sensor surface of each sensor of the first sensor group and the second feed mechanism for feeding the cleaning fluid to the second jetting apparatus, which cleans the sensor surface of each sensor of the second sensor group. Therefore, the sensor surfaces of the sensors for obtaining information of the first surrounding region are not cleaned simultaneously. Accordingly, the present invention can prevent or restrain occurrence of a situation where information cannot be obtained from a region in a certain direction (or the accuracy of information obtained from the region in the certain direction becomes low) because of cleaning of the sensor surface, while rendering the number of the feeding mechanisms of the cleaning apparatus smaller than the number of the jetting apparatuses.

The sole sensor belonging to the first sensor group or each of the sensors belonging to the first sensor group is a LiDAR, and each of the sensors belonging to the second sensor group is a camera. In this case, the control unit is configured to activate, when the cleaning execution condition is satisfied, the second feed mechanism without activating the first feed mechanism in the case where the sensor(s) belonging to the first sensor group have the to-be-cleaned sensor surface(s) and the sensors belonging to the second sensor group have the to-be-cleaned sensor surface(s).

By virtue of such a configuration, in the case where it is determined that both the sensor surface of a sensor (LiDAR) of the first sensor group and the sensor surface of a sensor (camera) of the second sensor group are contained in the to-be-cleaned sensor surfaces, the sensor surface of the sensor (camera) of the second sensor group is cleaned (namely, cleaning of the sensor surface of the camera is performed preferentially). In some cases, an image captured by each camera is displayed on a display unit or the like (is provided to an occupant). If the sensor surface of the camera is dirty, the occupant may feel strange when viewing the displayed image. In view of this, cleaning of the sensor surfaces of the cameras is performed preferentially over cleaning of the sensor surfaces of the LiDARs. This prevents the occupant from feeling strange.

The first feed mechanism may include a first pump and may be configured to feed the cleaning fluid to the first jetting apparatus when the first pump is activated. The second feed mechanism may include a second pump and may be configured to feed the cleaning fluid to the second jetting apparatus when the second pump is activated.

By virtue of this configuration, the cleaning fluid can be supplied, by using one pump, to a plurality of nozzles which jet the cleaning fluid so as to clean the sensor surfaces of the sensors belonging to the first sensor group, and the cleaning fluid can be supplied, by using another pump, to a plurality of nozzles which jet the cleaning fluid so as to clean the sensor surfaces of the sensors belonging to the second sensor group. Therefore, the number of pumps can be reduced.

The first feed mechanism may include a first pump and a second pump and may be configured to feed the cleaning fluid to one or more nozzles which are part of the plurality of nozzles belonging to the first jetting apparatus when the first pump is activated and to feed the cleaning fluid to one or more nozzles which are the remaining nozzles of the plurality of nozzles belonging to the first jetting apparatus, when the second pump is activated.

The second feed mechanism may include a third pump and a fourth pump and may be configured to feed the cleaning fluid to one or more nozzles which are part of the plurality of nozzles belonging to the second jetting apparatus when the third pump is activated and to feed the cleaning fluid to one or more nozzles which are the remaining nozzles of the plurality of nozzles belonging to the second jetting apparatus when the fourth pump is activated.

The second feed mechanism may include a first pump and a second pump and may be configured to feed the cleaning fluid to one or more nozzles which are part of the plurality of nozzles belonging to the second jetting apparatus when the first pump is activated and to feed the cleaning fluid to one or more nozzles which are the remaining nozzles of the plurality of nozzles belonging to the second jetting apparatus when the second pump is activated.

By virtue of these configurations, the number of nozzles connected to one pump can be reduced. Therefore, the pressure and flow rate of the cleaning fluid jetted from each nozzle can be increased stably.

The first feed mechanism may include an pump and a first flow passage open-close valve of an electromagnetic type and may be configured to feed the cleaning fluid to the first jetting apparatus when the pump is activated and the first flow passage open-close valve brings its internal flow passage into an open state. The second feed mechanism may include the pump and a second flow passage open-close valve of an electromagnetic type and may be configured to feed the cleaning fluid to the second jetting apparatus when the pump is activated and the second flow passage open-close valve brings its internal flow passage into an open state.

By virtue of this configuration, the number of expensive pumps can be reduced.

The control unit may be configured

to determine whether or not the number of clean sensor surfaces is equal to or less than a predetermined clean sensor surface threshold value, the clean sensor surfaces being sensor surfaces which are determined not to be the to-be-cleaned sensor surface among the sensor surface(s) of the LiDAR(s) belonging to the first sensor group and capable of obtaining information of a predetermined region which is part of the surrounding region of the vehicle and the sensor surface(s) of the camerasbelonging to the second sensor group and capable of obtaining information of the predetermined region, and

to determine that the cleaning execution condition is satisfied in the case where the number of the clean sensor surfaces is determined to be equal to or less than the clean sensor surface threshold value.

This configuration can prevent or restrain occurrence of a situation where "a sensor surface which is not a to-be-cleaned sensor surface" is not contained in the sensor surfaces of a plurality of sensors for obtaining information from a region which is part of the surrounding region of the vehicle and is located in a certain direction. Accordingly, it is possible to prevent or restrain a decrease in the accuracy of the obtained information for all the directions around the vehicle.

The control unit may be configured

to be capable of executing drive assist controls by using the LiDAR(s)belonging to the first sensor group and the cameras belonging to the second sensor group, the drive assist controls assisting a driver of the vehicle in driving the vehicle,

to determine that the cleaning execution condition is satisfied when the number of the clean sensor surfaces is determined to be equal to or less than the clean sensor surface threshold value, in the case where no drive assist control is being executed, and

to determine that the cleaning execution condition is satisfied when at least one sensor has the to-be-cleaned sensor surface, in the case where a particular drive assist control among the drive assist controls is being executed.

There is a demand for decreasing the number of object undetectable sensors to a possible extent during execution of the drive assist control. The strength of the demand varies in accordance with the contents (level) of the drive assist control. Therefore, by virtue of such a configuration, in the case where the particular drive assist control which raises a strong demand for decreasing the number of object undetectable sensors to a possible extent is being executed, the number of sensors which cannot detect objects can be reduced.

The first jetting apparatus may include:

a nozzle for jetting the cleaning fluid against a sensor surface of a front LiDAR which serves as the first particular sensor and is configured to obtain information of regions located on a front side, a right front lateral side, and a left front lateral side, respectively, of the vehicle.

The second jetting apparatus may include:

a nozzle for jetting the cleaning fluid against a sensor surface of a front camera contained in the second sensor group and configured to obtain information of regions located on the front side, the right front lateral side, and the left front lateral side, respectively, of the vehicle,

a nozzle for jetting the cleaning fluid against a sensor surface of a rear camera contained in the second sensor group and configured to obtain information of regions located on a rear side, a right rear lateral side, and a left rear lateral side, respectively, of the vehicle,

a nozzle for jetting the cleaning fluid against a sensor surface of a right lateral camera contained in the second sensor group and configured to obtain information of regions located on a right lateral side, a right front lateral side, and a right rear lateral side, respectively, of the vehicle, and

a nozzle for jetting the cleaning fluid against a sensor surface of a left lateral camera contained in the second sensor group and configured to obtain information of regions located on a left lateral side, a left front lateral side, and a left rear lateral side, respectively, of the vehicle.

By virtue of this configuration, the sensor surface of the front LiDAR and the sensor surface of the front camera are not cleaned simultaneously. Therefore, during a period during which the sensor surface of the front LiDAR is being cleaned, an object present in front of the vehicle can be detected by the front camera, and, during a period during which the sensor surface of the front camera is being cleaned, the object present in front of the vehicle can be detected by the front LiDAR. Accordingly, it is possible to prevent occurrence of periods during which the object present in front of the vehicle cannot be detected due to cleaning of the sensor surfaces.

The first jetting apparatus may include:

a nozzle for jetting the cleaning fluid against a sensor surface of a right front lateral LiDAR contained in the first sensor group and configured to obtain information of regions located on the front side and the right front lateral side, respectively, of the vehicle,

a nozzle for jetting the cleaning fluid against a sensor surface of a right rear lateral LiDAR contained in the first sensor group and configured to obtain information of regions located on the right rear lateral side, the rear side, and the right lateral side, respectively, of the vehicle,

a nozzle for jetting the cleaning fluid against a sensor surface of a left rear lateral LiDAR contained in the first sensor group and configured to obtain information of regions located on the left rear lateral side, the rear side, and the left lateral side, respectively, of the vehicle, and

a nozzle for jetting the cleaning fluid against a sensor surface of a left front lateral LiDAR contained in the first sensor group and configured to obtain information of regions located on the left front lateral side, the front side, and the left lateral side, respectively, of the vehicle.

By virtue of this configuration, the sensor surfaces of the LiDARs and the sensor surfaces of the cameras are not cleaned simultaneously. Therefore, during a period during which the sensor surfaces of the LiDARs are being cleaned, objects present in the surrounding region of the vehicle can be detected by the cameras, and, during a period during which the sensor surfaces of the cameras are being cleaned, the objects present in the surrounding region of the vehicle can be detected by the LiDARs. Accordingly, it is possible to prevent occurrence of periods during which the objects present in the surrounding region of the vehicle cannot be detected due to cleaning of the sensor surfaces.

In the above description, in order to facilitate understanding of the present invention, the constituent elements of the invention corresponding to those of embodiments of the invention which will be described later are accompanied by parenthesized reference numerals which are used in the embodiments; however, the constituent elements of the invention are not limited to those in the embodiments defined by the reference numerals.

BRIEF DESCRIPTION OF THE DRAWINGS

FIG. 1 is a view showing an object detection direction of each sensor;
FIG. 2 is a block diagram showing the configuration of a cleaning apparatus according to a first embodiment;
FIG. 3 is a table showing an object detection area of each sensor;
FIG. 4 is a flowchart showing a routine executed by a CPU;
FIG. 5 is a block diagram showing the configuration of a cleaning apparatus according to a second embodiment;
FIG. 6 is a block diagram showing the configuration of a cleaning apparatus according to a third embodiment;
FIG. 7 is a block diagram showing the configuration of a cleaning apparatus according to a fourth embodiment;
FIG. 8 is a table showing an object detection area of each sensor; and
FIG. 9 is a flowchart showing a routine executed by the CPU.

DESCRIPTION OF THE PREFERRED EMBODIMENTS

<First embodiment>

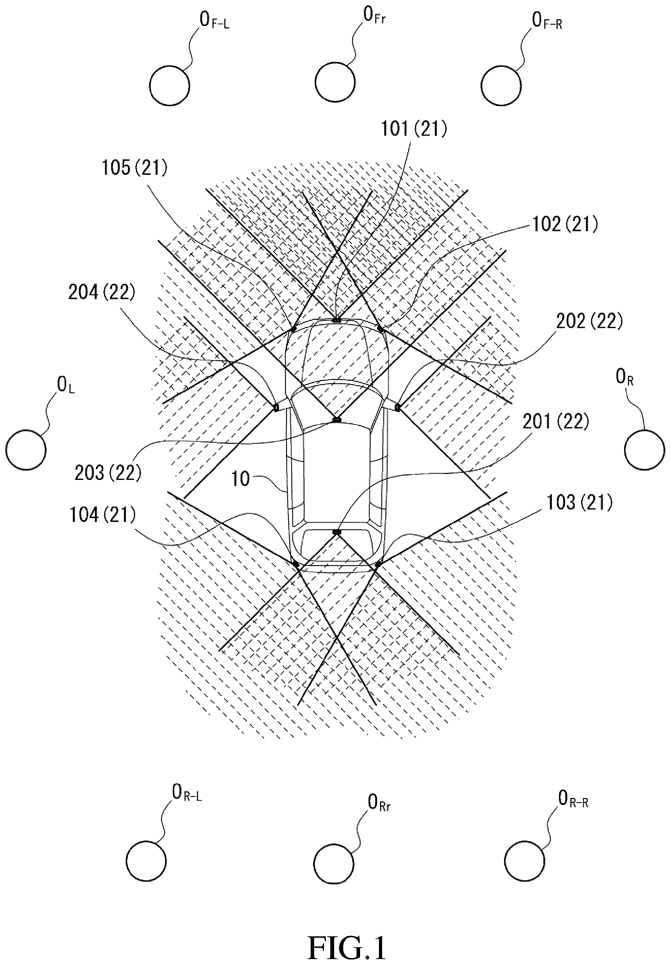

A cleaning apparatus according to a first embodiment of the present invention is applied to a vehicle 10 which includes a plurality of first sensors 21 and a plurality of second sensors 22 as shown in FIG. 1. In this embodiment, the plurality of first sensors 21 is an example of the first sensor group of this invention, and the plurality of second sensors 22 is an example of the second sensor group of this invention. Each of these sensors obtains information regarding an object present around the vehicle 10 (hereinafter referred to as "object information"). The object information includes some or all of the distance between each sensor and the object, the direction in which the object is present in relation to the sensor, the speed (relative speed) of the object relative to the sensor, and the type of the object (for example, a vehicle, a bicycle, or a pedestrian). In the following description, operation of obtaining the object information may be expressed by an expression "detecting an object."

The plurality of first sensors 21 include a front LiDAR 101, a right front lateral LiDAR 102, a right rear lateral LiDAR 103, a left rear lateral LiDAR 104, and a left front lateral LiDAR 105. LiDAR stands for Light Detection and Ranging or Laser Imaging Detection and Ranging. Each of the LiDARs 101 to 105 emits a narrow beam of infrared laser light in the form of pulses to the outside of the vehicle 10. Each LiDAR measures the time between a point in time when the LiDAR has emitted laser light and a point in time when the emitted laser light reaches the LiDAR after being reflected by an object. The LiDAR measures the distance between the LiDAR and the object on the basis of the measured time. Furthermore, the LiDAR changes the emission direction of the laser light to various directions by using a movable mirror. As a result, the LiDAR can detects the direction in which the object is present in relation to the LiDAR.

In the following description, objects present in the surrounding region of the vehicle 10 (a predetermined area containing the vehicle 10) will be called as follows.

An object $O_{Fr}$ present in a region in front of the vehicle 10 (straightforward front region): front object $O_{Fr}$

An object $O_{F-R}$ present in a region on the right front lateral side of the vehicle 10 (diagonal right front region): right front lateral object $O_{F-R}$

An object $O_{F-L}$ present in a region on the left front lateral side of the vehicle 10 (diagonal left front region): left front lateral object $O_{F-L}$

An object $O_R$ present in a region on the right lateral side of the vehicle 10 (right lateral region): right lateral object $O_R$

An object $O_L$ present in a region on the left lateral side of the vehicle 10 (left lateral region): left lateral object $O_L$

An object $O_{Rr}$ present in a region behind the vehicle 10 (straightforward rear region): rear object $O_{Rr}$

An object $O_{R-R}$ present in a region on the right rear lateral side of the vehicle 10 (diagonal right rear region): right rear lateral object $O_{R-R}$

An object $O_{R-L}$ present in a region on the left rear lateral side of the vehicle 10 (diagonal left rear region): left rear lateral object $O_{R-L}$

Specifically, the region in front of the vehicle 10 (straightforward front region) is an area of a region located frontward of a straight line passing through a front end of the vehicle 10 and extending in a vehicle width direction, the area being located between a straight line passing through a right end of the vehicle 10 and extending in a front-back direction and a straight line passing through a left end of the vehicle 10 and extending in the front-back direction. The region on the right front lateral side of the vehicle 10 (diagonal right front region) is an area of the region located frontward of the straight line passing through the front end of the vehicle 10 and extending in the vehicle width direction, the area being located rightward of the straightforward front region. The region on the left front lateral side of the vehicle 10 (diagonal left front region) is an area of the region located frontward of the straight line passing through the front end of the vehicle 10 and extending in the vehicle width direction, the area being located leftward of the straightforward front region. The region on the right lateral side of the vehicle 10 (right lateral region) is an area of a region located rightward of the right end of the vehicle 10, the area being located between the straight line passing through the front end of the vehicle 10 and extending in the vehicle width direction and a straight line passing through a rear end of the vehicle 10 and extending in the vehicle width direction. The region on the left lateral side of the vehicle 10 (left lateral region) is an area of a region located leftward of the left end of the vehicle 10, the area being located between the straight line passing through the front end of the vehicle 10 and extending in the vehicle width direction and the straight line passing through the rear end of the vehicle 10 and extending in the vehicle width direction. The region behind the vehicle 10 (straightforward rear region) is an area of a region located rearward of the straight line passing through the rear end of the vehicle 10 and extending in the vehicle width direction, the area being located between the straight line passing through the right end of the vehicle 10 and extending in the front-back direction and the straight line passing through the left end of the vehicle 10 and extending in the front-back direction. The region on the right rear lateral side of the vehicle 10 (diagonal right rear region) is an area of the region located rearward of the straight line passing through the rear end of the vehicle 10 and extending in the vehicle width direction, the area being located rightward of the straightforward rear region. The region on the left rear lateral side of the vehicle 10 (diagonal left rear region) is an area of the region located rearward of the straight line passing through the rear end of the vehicle 10 and extending in the vehicle width direction, the area being located leftward of the straightforward rear region.

The front LiDAR 101 is provided at a front grille of the vehicle 10. The front LiDAR 101 can detect the front object $O_{Fr}$, the right front lateral object $O_{F-R}$, and the left front lateral object $O_{F-L}$. However, since the front LiDAR 101 emits laser light to a conical region whose apex is located at the position of the front LiDAR 101 and receives laser light from that conical region, an object undetectable region may exist right near the vehicle 10 (this is also true for other LiDARs and cameras). The right front lateral LiDAR 102 is provided at a right front portion of the vehicle 10. The right front lateral LiDAR 102 can detect the front object $O_{Fr}$, the right front lateral object $O_{F-R}$, and the right lateral object $O_R$. The right rear lateral LiDAR 103 is provided at a right rear portion of the vehicle 10. The right rear lateral LiDAR 103 can detect the right rear lateral object $O_{R-R}$, the rear object $O_{Rr}$, and the right lateral object $O_R$. The left rear lateral LiDAR 104 is provided at a left rear portion of the vehicle 10. The left rear lateral LiDAR 104 can detect the left rear lateral object $O_{R-L}$, the rear object $O_{Rr}$, and the left lateral object $O_L$. The left front lateral LiDAR 105 is provided at a left front portion of the vehicle 10. The left front lateral LiDAR 105 can detect the left front lateral object $O_{F-L}$, the front object $O_{Fr}$, and the left lateral object $O_L$.

The plurality of second sensors 22 include a rear camera 201, a right lateral camera 202, a front camera 203, and a left lateral camera 204. Each of the cameras 201 to 204 generates image data by photographing a scene outside the vehicle 10 and obtains object information on the basis of the image data.

The rear camera 201 is provided on the interior side of a rear windshield. The rear camera 201 can photograph scenes on the back side, the right rear lateral side, and the left rear lateral side of the vehicle 10. Therefore, the rear camera 201 can photograph the rear object $O_{Rr}$, the right rear lateral object $O_{R-R}$, and the left rear lateral object $O_{R-L}$ and can detect the positions, directions, etc. of these objects. The right lateral camera 202 is provided on a right side mirror. The right lateral camera 202 can photograph scenes on the right lateral side, the right front lateral side, and the right rear lateral side of the vehicle 10. Therefore, the right lateral camera 202 can photograph the right front lateral object $O_{F-R}$, the right lateral object $O_R$, and the right rear lateral object $O_{R-R}$ and can detect the positions, directions, etc. of these objects. The front camera 203 is provided on the interior side of a front windshield. The front camera 203 can photograph scenes on the front side, the right front lateral side, and the left front lateral side of the vehicle 10. Therefore, the front camera 203 can photograph the front object $O_{Fr}$, the right front lateral object $O_{F-R}$, and the left front lateral object $O_{F-L}$ and can detect the positions, directions, etc. of these objects. The left lateral camera 204 is provided on a left side mirror. The left lateral camera 204 can photograph scenes on the left lateral side, the left front lateral side, and the left rear lateral side of the vehicle 10. Therefore, the left lateral camera 204 can photograph the left front lateral object $O_{F-L}$, the left lateral object $O_L$, and the left rear lateral object $O_{R-L}$ and can detect the positions, directions, etc. of these objects.

Each of the LiDARs 101 to 105 has a window portion (protective portion) through which laser light can pass. Each of the LiDARs 101 to 105 emits laser light through the window portion and receives reflection laser light passing through the window portion. Each of the cameras 201 to 204 has a window portion (protective portion) through which visible light can pass. Each of the cameras 201 to 204 receives visible light which propagates from the outside of the vehicle 10 through the window portion. One of opposite surfaces of each window portion is exposed to an environment outside the vehicle 10 (hereinafter may be referred to as the "outside of the vehicle 10"). The surface of the window portion exposed to the outside of the vehicle 10 will be referred to as the "sensor surface."

The front camera 203 is provided at a central portion (in the vehicle width direction) of an upper portion of the front windshield of the vehicle 10 to be located on the vehicle interior side. The front camera 203 photographs a scene in front of the vehicle 10 by using visible light passing through a portion (hereinafter also referred to as a "front photographing window portion") of the front windshield located on the front side of its lens. One surface of the front photographing window portion is exposed to the outside of the vehicle 10. Similarly, the rear camera 201 is provided at a central portion (in the vehicle width direction) of an upper portion of the rear windshield of the vehicle 10 to be located on the vehicle interior side. The rear camera 201 photographs a scene behind the vehicle 10 by using visible light passing through a portion (hereinafter also referred to as a "rear photographing window portion") of the rear windshield located on the rear side of its lens. One surface of the rear photographing window portion is exposed to the outside of the vehicle 10. Therefore, the surfaces of the front photographing window portion and the rear photographing window portion, which surfaces are located on the outer side of the vehicle 10, are also sensor surfaces.

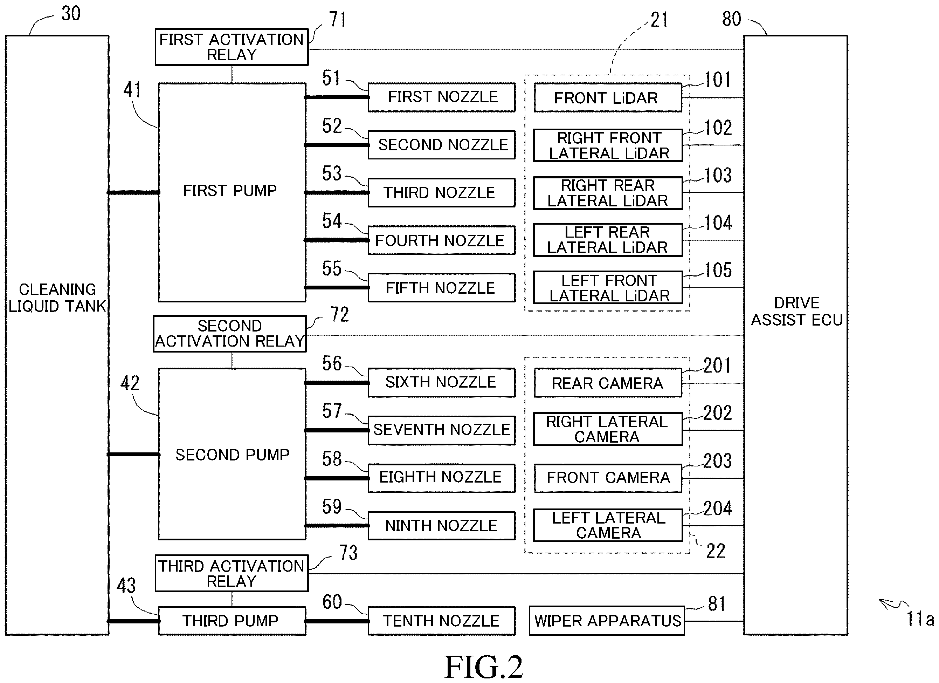

The vehicle 10 includes a cleaning apparatus 11a shown in FIG. 2. The cleaning apparatus 11a includes a cleaning liquid tank 30, a first pump 41, a second pump 42, a third pump 43, a first nozzle 51, a second nozzle 52, a third nozzle 53, a fourth nozzle 54, a fifth nozzle 55, a sixth nozzle 56, a seventh nozzle 57, an eighth nozzle 58, a ninth nozzle 59, a tenth nozzle 60, a first activation relay 71, a second activation relay 72, a third activation relay 73, a drive assist ECU 80, and a wiper apparatus 81. In this embodiment, the first nozzle 51, the second nozzle 52, the third nozzle 53, the fourth nozzle 54, and fifth nozzle 55 are examples of the first jetting apparatus, and the sixth nozzle 56, the seventh nozzle 57, the eighth nozzle 58, and ninth nozzle 59 are examples of the second jetting apparatus. In this embodiment, the first pump 41 and the first activation relay 71 are example of the first feed mechanism, and the second pump 42 and the second activation relay 72 are example of the second feed mechanism.

The cleaning liquid tank 30 is configured to store a cleaning liquid, which is a cleaning medium.

The first pump 41 is connected to the first nozzle 51, the second nozzle 52, the third nozzle 53, the fourth nozzle 54, and the fifth nozzle 55 through a cleaning liquid passage composed of tube, pipe, etc. When the first pump 41 is activated (namely, in operation), the first pump 41 feeds (pumps) the cleaning liquid stored in the cleaning liquid tank 30 to the first nozzle 51 to the fifth nozzle 55.

The second pump 42 is connected to the sixth nozzle 56, the seventh nozzle 57, the eighth nozzle 58, and the ninth nozzle 59 through a cleaning liquid passage. When the second pump 42 is activated (namely, in operation), the second pump 42 feeds (pumps) the cleaning liquid stored in the cleaning liquid tank 30 to the sixth nozzle 56 to the ninth nozzle 59.

The first nozzle 51 to the fifth nozzle 55 are jetting apparatuses for jetting the cleaning liquid against the sensor surfaces of the LiDARs 101 to 105, respectively.

More specifically, the first nozzle 51 is configured to jet the cleaning liquid fed by the first pump 41 against the sensor surface of the front LiDAR 101, thereby cleaning the sensor surface of the front LiDAR 101. The second nozzle 52 is configured to jet the cleaning liquid fed by the first pump 41 against the sensor surface of the right front lateral LiDAR 102, thereby cleaning the sensor surface of the right front lateral LiDAR 102. The third nozzle 53 is configured to jet the cleaning liquid fed by the first pump 41 against the sensor surface of the right rear lateral LiDAR 103, thereby cleaning the sensor surface of the right rear lateral LiDAR 103. The fourth nozzle 54 is configured to jet the cleaning liquid fed by the first pump 41 against the sensor surface of the left rear lateral LiDAR 104, thereby cleaning the sensor surface of the left rear lateral LiDAR 104. The fifth nozzle 55 is configured to jet the cleaning liquid fed by the first pump 41 against the sensor surface of the left front lateral LiDAR 105, thereby cleaning the sensor surface of the left front lateral LiDAR 105.

The sixth nozzle 56 to the ninth nozzle 59 are jetting apparatuses for jetting the cleaning liquid against the sensor surfaces of the cameras 201 to 204, respectively.

More specifically, the sixth nozzle 56 is configured to jet the cleaning liquid fed by the second pump 42 against the sensor surface of the rear camera 201, thereby cleaning the sensor surface of the rear camera 201. The seventh nozzle 57 is configured to jet the cleaning liquid fed by the second pump 42 against the sensor surface of the right lateral camera 202, thereby cleaning the sensor surface of the right lateral camera 202. The eighth nozzle 58 is configured to jet the cleaning liquid fed by the second pump 42 against the sensor surface of the front camera 203, thereby cleaning the sensor surface of the front camera 203. The ninth nozzle 59 is configured to jet the cleaning liquid fed by the second pump 42 against the sensor surface of the left lateral camera 204, thereby cleaning the sensor surface of the left lateral camera 204.

The third pump 43 is connected to the tenth nozzle 60 through a cleaning liquid passage. When the third pump 43 is activated (namely, in operation), the third pump 43 feeds (pumps) the cleaning liquid stored in the cleaning liquid tank 30 to the tenth nozzle 60. The tenth nozzle 60 is configured to jet the cleaning liquid fed by the third pump 43 against the surface of the front windshield located on the outer side of the vehicle.

The first activation relay 71 switches between an on (closed) state and an off (open) state in accordance with an instruction signal from the drive assist ECU 80, thereby switching the state of supply of electric power for operation to the first pump 41 between a power supply state and a power shutoff state. Namely, during a period during which the first activation relay 71 is in the on state, electric power is supplied to the first pump 41, so that the first pump 41 operates. As a result, the sensor surfaces of all the LiDARs 101 to 105 (namely, all the first sensors 21) are cleaned. During a period during which the first activation relay 71 is in the off state, the first pump 41 does not operate (stops).

The second activation relay 72 switches between an on state and an off state in accordance with an instruction signal from the drive assist ECU 80, thereby switching the state of supply of electric power for operation to the second pump 42 between a power supply state and a power shutoff state. Namely, during a period during which the second activation relay 72 is in the on state, electric power is supplied to the second pump 42, so that the second pump 42 operates. As a result, the sensor surfaces of all the cameras 201 to 204 (namely, all the second sensors 22) are cleaned. During a period during which the second activation relay 72 is in the off state, the second pump 42 does not operate (stops).

The third activation relay 73 switches between an on state and an off state in accordance with an instruction signal from the drive assist ECU 80, thereby switching the state of supply of electric power for operation to the third pump 43 between a power supply state and a power shutoff state. Namely, during a period during which the third activation relay 73 is in the on state, electric power for operation is supplied to the third pump 43, so that the third pump 43 operates. As a result, the cleaning liquid is jetted against the front windshield. During a period during which the third activation relay 73 is in the off state, the third pump 43 stops.

Notably, each of the first activation relay 71, the second activation relay 72, and the third activation relay 73 is a normal-open-type relay (a relay which becomes the off state when no activation signal is supplied thereto).

The drive assist ECU 80 is an example of the control unit of this invention. The drive assist ECU 80 includes a computer containing a CPU, a ROM, a RAM, an interface, etc. Notably, the "ECU" means an "electronic control unit" and may be called a control unit or a controller. The CPU of the drive assist ECU 80 is configured to realize various functions by reading out and executing instructions (programs, routines) stored in the ROM. The drive assist ECU 80 may be composed of two or more ECUs.

(Operation of drive assist ECU)

The drive assist ECU 80 is configured to execute drive assist controls. The drive assist controls detect an object(s) present in the surrounding region of the vehicle 10 by using the LiDARs 101 to 105 and the cameras 201 to 204, and assist a driver in driving the vehicle 10 in accordance with the results of the detection. In the present embodiment, the drive assist controls executed by the drive assist ECU 80 are classified into a plurality of levels (stages); i.e., drive assist levels Lv1 to Lv5, as will be described below. The higher the drive assist level, the larger the number of driving operations (driving tasks) performed by the drive assist ECU 80. The drive assist level Lv1 is the lowest level, and the drive assist level Lv5 is the highest level.

[Lv1] The drive assist ECU 80 executes subtasks of driving tasks related to one of steering control and acceleration deceleration control. For example, the drive assist ECU 80 executes limited drive assist control by using adaptive cruise control (ACC), path-following control, etc.

[Lv2] The drive assist ECU 80 executes subtasks of driving tasks related to both the steering control and the acceleration deceleration control. For example, the drive assist ECU 80 executes drive assist control by simultaneously performing a plurality of controls such as the adaptive cruise control (ACC) and the path-following control.

[Lv3] In a region where limited drive assist is possible, the drive assist ECU 80 executes all the driving tasks related to the steering control and the acceleration deceleration control. The driver is allowed to take the hands off the steering wheel. However, the driver is demanded to monitor the surrounding conditions of the vehicle 10. Notably, the driver performs manual driving when necessary.

[Lv4] In the region where limited drive assist is possible, the drive assist ECU 80 executes all the driving tasks related to the steering control and the acceleration deceleration control. The driver does not need to monitor the surrounding conditions of the vehicle 10. The driver is allowed to perform another operation (second task). In a state of emergency, the drive assist ECU 80 demands the driver to start manual driving. However, the driver is not expected to meet the demand.

[Lv5] In all regions, the drive assist ECU 80 executes all the driving tasks related to the steering control and the acceleration deceleration control. The driver does not need to monitor the surrounding conditions of the vehicle 10. The driver is allowed to perform another operation (second task). In a state of emergency, the drive assist ECU 80 automatically moves the vehicle 10 to a safe place.

At the drive assist levels Lv1 and Lv2, the driver executes some of the driving tasks. In contrast, at the drive assist levels Lv3 to Lv5, the drive assist ECU 80 executes all the driving tasks.

Furthermore, the drive assist ECU 80 is configured to execute sensor surface cleaning control. The drive assist ECU 80 performs the following operations as the sensor surface cleaning control.

- The drive assist ECU 80 determines whether or not a sensor surface which is dirty to an extent that requires cleaning (hereinafter referred to as a "to-be-cleaned sensor surface") is present.

- The drive assist ECU 80 determines, on the basis of the results of the above determination, whether or not a cleaning execution condition (a condition for executing sensor surface cleaning operation) is satisfied.
- In the case where the drive assist ECU 80 determines that the cleaning execution condition is satisfied, the drive assist ECU 80 selectively activates (drives) one of the first pump 41 and the second pump 42 so that the to-be-cleaned sensor surface is cleaned. Namely, during a period during which one of the first pump 41 and the second pump 42 is operating, the other of the first pump 41 and the second pump 42 is stopped.

Furthermore, the drive assist ECU 80 is configured to execute glass cleaning control for cleaning the front windshield. Specifically, when the drive assist ECU 80 detects a switch operation which is performed by a user of the vehicle 10 and which instructs cleaning of the front windshield, the drive assist ECU 80 activates the third pump 43 by bringing the third activation relay 73 into the on state and activates the wiper apparatus 81. As a result, the front windshield of the vehicle 10 is cleaned. Additionally, the drive assist ECU 80 displays the images captured by the cameras 201 to 204 on an unillustrated display unit. As a result, the user (occupant) of the vehicle 10 can view the images captured by the cameras 201 to 204.

Incidentally, in order to accurately detect objects, the sensor surfaces of the LiDARs 101 to 105 and the cameras 201 to 204 are preferably maintained in a state in which dust, dirt, etc. are not adhered to the sensor surfaces (clean state). Furthermore, in order to execute the drive assist control, detection of objects present around the vehicle 10 is preferably executed continuously for all the directions. In particular, this demand becomes stronger as the drive assist level becomes higher.

Therefore, the drive assist ECU 80 maintains the sensor surfaces in the clean state by executing the sensor surface cleaning control. Meanwhile, during a period during which the sensor surface of a certain sensor is being cleaned, the cleaning liquid is jetted against the sensor surface of the certain sensor. Therefore, the certain sensor whose sensor surface is being cleaned cannot detect an object (including the case where the sensor cannot detect the object accurately). Accordingly, in a state in which the sensor surfaces of all the sensors provided for detecting an object(s) present in a particular direction as viewed from the vehicle 10 are cleaned simultaneously, the object(s) present in the particular direction cannot be detected. Such a state is not preferred for the drive assist control.

In view of the above, in the present embodiment, the sensors (the first sensors 21 and the second sensors 22) are arranged in such a manner that an object(s) (for example, the same object) present in the same direction as viewed from the vehicle 10 can be detected by a plurality of sensors. Of the nozzles provided for the sensor surfaces of the plurality of sensors that can detect the object(s) present in the same direction, one or more nozzles receive the cleaning liquid fed from the first pump 41, and the remaining nozzle(s) receive the cleaning liquid fed from the second pump 42. The first pump 41 and the second pump 42 are not activated simultaneously.

In the following description, "a plurality of sensors which can detect an object(s) present in the same direction (an area in the same direction) and whose sensor surfaces are cleaned by nozzles to which the cleaning liquid is fed from different cleaning liquid feed mechanisms (pumps in the first embodiment)" are referred to as "sensors which are complementary with each other." Notably, the plurality of sensors which can detect an object(s) present in the same direction can be said as a plurality of sensors whose object detectable areas overlap each other.

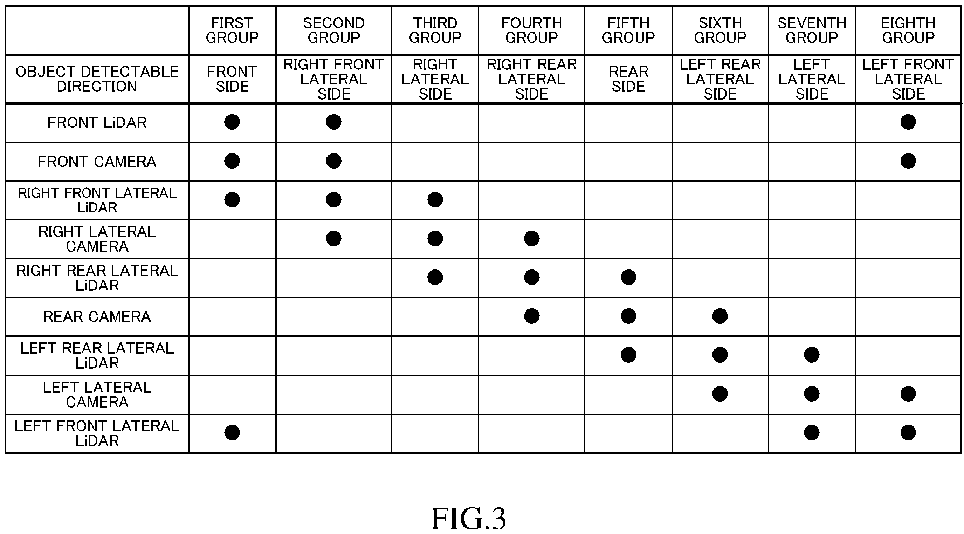

In the present embodiment, one or more first sensors 21 chosen from the plurality of the first sensors 21 and one or more second sensor 22 chosen from the plurality of second sensors 22 constitute sensors which are complementary with each other. The table shown in FIG. 3 show directions in which each sensor can detect an object(s). For each sensor, it is shown that directions corresponding to cells in which solid black circles are depicted are directions in which objects can be detected (hereinafter referred to as the "object detectable directions"), and directions corresponding to blank cells are directions in which objects cannot be detected (hereinafter referred to as the "object undetectable directions").

A first group is a group composed of a plurality of sensors which can detect the front object $O_{Fr}$. The first group is composed of the front LiDAR 101, the right front lateral LiDAR 102, the left front lateral LiDAR 105, and the front camera 203. In the first group, "the front LiDAR 101, the right front lateral LiDAR 102, and the left front lateral LiDAR 105," which are part of the first sensors 21, and "the front camera 203," which is one of the second sensors 22, are sensors which are complementary with each other.

A second group is a group composed of a plurality of sensors which can detect the right front lateral object $O_{F-R}$. The second group is composed of the front LiDAR 101, the right front lateral LiDAR 102, the right lateral camera 202, and the front camera 203. In the second group, "the front LiDAR 101 and the right front lateral LiDAR 102," which are part of the first sensors 21, and "the right lateral camera 202 and the front camera 203," which are part of the second sensors 22, are sensors which are complementary with each other.

A third group is a group composed of a plurality of sensors which can detect the right lateral object $O_R$. The third group is composed of the right front lateral LiDAR 102, the right rear lateral LiDAR 103, and the right lateral camera 202. In the third group, "the right front lateral LiDAR 102 and the right rear lateral LiDAR 103," which are part of the first sensors 21, and "the right lateral camera 202," which is one of the second sensors 22, are sensors which are complementary with each other.

A fourth group is a group composed of a plurality of sensors which can detect the right rear lateral object $O_{R-R}$. The fourth group is composed of the right rear lateral LiDAR 103, the right lateral camera 202, and the rear camera 201. In the fourth group, "the right rear lateral LiDAR 103," which is one of the first sensors 21, and "the right lateral camera 202 and the rear camera 201," which are part of the second sensors 22, are sensors which are complementary with each other.

A fifth group is a group composed of a plurality of sensors which can detect the rear object $O_{Rr}$. The fifth group is composed of the right rear lateral LiDAR 103, the left rear lateral LiDAR 104, and the rear camera 201. In the fifth group, "the right rear lateral LiDAR 103 and the left rear lateral LiDAR 104," which are part of the first sensors 21, and "the rear camera 201," which is one of the second sensors 22, are sensors which are complementary with each other.

A sixth group is a group composed of a plurality of sensors which can detect the left rear lateral object $O_{R-L}$. The sixth group is composed of the left rear lateral LiDAR 104, the rear camera 201, and the left lateral camera 204. In the sixth group, "the left rear lateral LiDAR 104," which is one of the first sensors 21, and "rear camera 201 and the left lateral camera 204," which are part of the second sensors 22, are sensors which are complementary with each other.

A seventh group is a group composed of a plurality of sensors which can detect the left lateral object $O_L$. The seventh group is composed of the left rear lateral LiDAR 104, the left front lateral LiDAR 105, and the left lateral camera 204. In the seventh group, "the left rear lateral LiDAR 104 and the left front lateral LiDAR 105," which are part of the first sensors 21, and "the left lateral camera 204," which is one of the second sensors 22, are sensors which are complementary with each other.

An eighth group is a group composed of a plurality of sensors which can detect the left front lateral object $O_{F-L}$. The eighth group is composed of the front LiDAR 101, the left front lateral LiDAR 105, the front camera 203, and the left lateral camera 204. In the eighth group, "the front LiDAR 101 and the left front lateral LiDAR 105," which are part of the first sensors 21, and "the front camera 203 and the left lateral camera 204," which are part of the second sensors 22, are sensors which are complementary with each other.

The drive assist ECU 80 selectively activates one of the first pump 41 and the second pump 42. Namely, the drive assist ECU 80 does not activate the first pump 41 and the second pump 42 simultaneously, so that the sensor surfaces of the sensors (LiDAR(s) and camera(s)) which are complementary with each other are not cleaned simultaneously. Therefore, a sensor whose sensor surface is not undergoing cleaning is present in each of all the directions of the surrounding region of the vehicle 10, and thus, an object can be detected by the sensor which is not undergoing cleaning. This will be described in detail below.

(1) Case where the first pump 41 is in operation

(1-1) Detection of the front object $O_{Fr}$

The front LiDAR 101, the right front lateral LiDAR 102, and the left front lateral LiDAR 105 cannot detect the front object $O_{Fr}$. However, since the second pump 42 does not operate during the period during which the first pump 41 is in operation, the front camera 203 can detect the front object $O_{Fr}$.

(1-2) Detection of the right front lateral object $O_{F-R}$

The front LiDAR 101 and the right front lateral LiDAR 102 cannot detect the right front lateral object $O_{F-R}$. However, the front camera 203 and the right lateral camera 202 can detect the right front lateral object $O_{F-R}$.

(1-3) Detection of the right lateral object $O_R$

The right front lateral LiDAR 102 and the right rear lateral LiDAR 103 cannot detect the right lateral object $O_R$. However, the right lateral camera 202 can detect the right lateral object $O_R$.

(1-4) Detection of the right rear lateral object $O_{R-R}$

The right rear lateral LiDAR 103 cannot detect the right rear lateral object $O_{R-R}$. However, the right lateral camera 202 and the rear camera 201 can detect the right rear lateral object $O_{R-R}$.

(1-5) Detection of the rear object $O_{Rr}$

The right rear lateral LiDAR 103 and the left rear lateral LiDAR 104 cannot detect the rear object $O_{Rr}$. However, the rear camera 201 can detect the rear object $O_{Rr}$.

(1-6) Detection of the left rear lateral object $O_{R-L}$

The left rear lateral LiDAR 104 cannot detect the left rear lateral object $O_{R-L}$. However, the rear camera 201 and the left lateral camera 204 can detect the left rear lateral object $O_{R-L}$.

(1-7) Detection of the left lateral object $O_L$

The left rear lateral LiDAR 104 and the left front lateral LiDAR 105 cannot detect the left lateral object $O_L$. However, the left lateral camera 204 can detect the left lateral object $O_L$.

(1-8) Detection of the left front lateral object $O_{F-L}$

The front LiDAR 101 and the left front lateral LiDAR 105 cannot detect the left front lateral object $O_{F-L}$. However, the front camera 203 and the left lateral camera 204 can detect the left front lateral object $O_{F-L}$.

(2) Case where the second pump 42 is in operation

In the above-described detecting operations (1-1) to (1-8), the first sensors (LiDARs) 21 can detect objects, and the second sensors (cameras) 22 cannot detect objects.

(Sensor surface cleaning control)

Next, the sensor surface cleaning control executed by the drive assist ECU 80 will be described. The sensor surface cleaning control involves:

(a) a step (first step) of determining whether or not each sensor surface is a to-be-cleaned sensor surface,
(b) a step (second step) of determining whether or not the cleaning execution condition is satisfied, and
(c) a step (third step) of selectively activating one of the first pump 41 and the second pump 42 upon the determination that the cleaning execution condition is satisfied.

(a) Step of determining whether or not each sensor surface is a to-be-cleaned sensor surface

The drive assist ECU 80 determines, on the basis of signals output from the LiDARs 101 to 105, respectively, whether or not the sensor surface of each of the LiDARs 101 to 105 is a to-be-cleaned sensor surface. Similarly, the drive assist ECU 80 determines, on the basis of image data generated by the cameras 201 to 204, respectively, whether or not the sensor surface of each of the cameras 201 to 204 is a to-be-cleaned sensor surface. Specifically, the drive assist ECU 80 determines whether or not a "sensor surface dirtiness index value" which is a value indicating the degree of dirtiness of each sensor surface is equal to or greater than a "dirtiness determination threshold value." In the present embodiment, a sensor surface whose sensor surface dirtiness index value is equal to or greater than the dirtiness determination threshold value is a to-be-cleaned sensor surface (namely, a sensor surface which is dirty to an extent that requires cleaning).
More specifically, the sensor surface dirtiness index value of each of the LiDARs 101 to 105 is "the magnitude of attenuation of infrared light due to dirtying of the sensor surface," which is prescribed as follows.

$$\text{Sensor surface dirtiness index value} = (\text{emission intensity of infrared light})/(\text{incident intensity of infrared light})$$

The emission intensity of infrared light is the intensity of infrared light which is emitted from an infrared light source of each of the LiDARs 101 to 105 to the outside of the vehicle through the corresponding sensor surface. The incident intensity of infrared light is the intensity of infrared light detected by each of the LiDARs 101 to 105.
In the case where the distribution of dirt on the sensor surface of each of the LiDARs 101 to 105 is uneven, the magnitude of attenuation of infrared light due to dirt may differ among positions on the sensor surface. Therefore, the sensor surface dirtiness index value may be obtained as follows. The magnitude of attenuation of infrared light is obtained for each of small regions obtained by dividing the sensor surface into a plurality of pieces, and the average of the magnitudes of attenuation is employed as the sensor surface dirtiness index value. Notably, the sensor surface dirtiness index value of each LiDAR may be obtained by the methods disclosed in Japanese Patent Application Laid-Open (kokai) Nos. 2020-038154 and 2020-001601.

The sensor surface dirtiness index value of each of the cameras 201 to 204 is "the ratio of the area of a dirty region to the area of an image captured by each of the cameras 201 to 204 (captured image)," which is prescribed as follows.

$$\text{Sensor surface dirtiness index value} = \text{(the area of a dirty region in the captured image)/(the overall area of the captured image)}$$

The dirty region in the captured image is a region where brightness hardly changes over a predetermined period (time) or longer (namely, a region where a change in brightness is equal to or less than a threshold value).

Notably, no limitation is imposed on the specific value of the dirtiness determination threshold value. Furthermore, the dirtiness determination threshold value for LiDARs and the dirtiness determination threshold value for cameras may differ from each other or may be the same in some cases. In addition, the dirtiness determination threshold value for LiDARs may differ among the LiDARs 101 to 105. Similarly, the dirtiness determination threshold value for cameras may differ among the cameras 201 to 204.

A method in which the sensor surface dirtiness index value is not used may be applied to the determination as to whether or not the sensor surface of each of the front camera 203 and the rear camera 201 is a to-be-cleaned sensor surface. For example, the determination may be performed as follows. The drive assist ECU 80 continuously and repeatedly executes a process of "detecting a white line depicted on a road surface by executing a known image processing on an image captured by each of the front camera 203 and the rear camera 201" at predetermined intervals. Subsequently, when the number of times a white line could not be detected becomes equal to or greater than a predetermined threshold value within a predetermined period of time, the drive assist ECU 80 determines that the sensor surface is a to-be-cleaned sensor surface. Alternatively, as the method in which the sensor surface dirtiness index value is not used, the following method can be applied. In the case where dirt adheres to the sensor surface of a certain camera among the cameras 201 to 204, the image captured by the certain camera becomes blurred as compared with the case where no dirt adheres to the sensor surface. In view of this, the drive assist ECU 80 detects edges (locations where brightness changes sharply) of the image captured by the certain camera and counts the number of edges contained in the image. Subsequently, when the number of edges contained in the captured image is equal to or less than a predetermined threshold value, the drive assist ECU 80 determines that the sensor surface corresponding to the certain camera which captured the image is a to-be-cleaned sensor surface.

(b) Step of determining whether or not the cleaning execution condition is satisfied

The drive assist ECU 80 determines whether or not the cleaning execution condition, which will be described below, is satisfied by using the number of sensors having sensor surfaces determined to be "to-be-cleaned sensor surfaces" (hereinafter may be referred to as the "to-be-cleaned sensor surface number" in some cases). Hereinafter, sensor surfaces which are not to-be-cleaned sensor surfaces will be referred to as "clean sensor surfaces," and the number of sensors having sensor surfaces determined to be "clean sensor surfaces" will be referred to as the "clean sensor surface number." The cleaning execution condition changes depending on whether or not the drive assist ECU 80 is executing the drive assist control and on its drive assist level in the case the drive assist control is performed.

(b-1) Case where the drive assist ECU 80 is executing no drive assist control or the drive assist ECU 80 is executing any of the drive assist controls of drive assist levels Lv1 and Lv2

The drive assist ECU 80 determines whether or not the clean sensor surface number of each of the above-described groups (the first to eighth groups) is equal to or less than a predetermined threshold value (hereinafter may be referred to as the "clean sensor surface threshold value"). In the present embodiment, the clean sensor surface threshold value is set to "1." In the case where there exist one or more groups in which the clean sensor surface number is equal to or less than the clean sensor surface threshold value, the drive assist ECU 80 determines that the cleaning execution condition is satisfied.

(b-2) Case where the drive assist ECU 80 is executing any of the drive assist controls of drive assist levels Lv3 to Lv5

At the drive assist levels Lv3 to Lv5, the drive assist ECU 80 executes all the driving tasks. Therefore, in the case where the drive assist level is any of the drive assist levels Lv3 to Lv5, a demand for decreasing the number of object undetectable sensors to a possible extent is strong. From this standpoint, in the case where there exist one or more sensors whose sensor surfaces are determined to be to-be-cleaned sensor surfaces, the drive assist ECU 80 determines that the cleaning execution condition is satisfied.

(c) Step of selectively activating one of the first pump 41 and the second pump 42

(c-1) Case where, although at least one of the LiDARs 101 to 105 has a to-be-cleaned sensor surface, none of the cameras 201 to 204 has a to-be-cleaned sensor surface

In this case, the drive assist ECU 80 sets the first activation relay 71 to the on state for a predetermined time (cleaning time for LiDARs), but maintains the second activation relay 72 in the off state.

(c-2) Case where, although at least one of the cameras 201 to 204 has a to-be-cleaned sensor surface, none of the LiDARs 101 to 105 has a to-be-cleaned sensor surface

In this case, the drive assist ECU 80 sets the second activation relay 72 to the on state for a predetermined time (cleaning time for camera), but maintains the first activation relay 71 in the off state.

(c-3) Case where at least one of the LiDARs 101 to 105 has a to-be-cleaned sensor surface and at least one of the cameras 201 to 204 has a to-be-cleaned sensor surface

In this case, the drive assist ECU 80 first sets the second activation relay 72 to the on state for the predetermined time (cleaning time for cameras) while maintaining the first activation relay 71 in the off state. Namely, the drive assist ECU 80 activates the second pump 42, thereby cleaning the sensor surfaces of the cameras 201 to 204. After completion of the cleaning of the sensor surfaces of the cameras 201 to 204, the drive assist ECU 80 executes the above-described steps (a) and (b) again. Subsequently, when the drive assist ECU 80 determines that the cleaning execution condition is satisfied, the drive assist ECU 80 operates to cope with one of the above-described cases (c-1) and (c-2). Notably, in the case where, as used to be, at least one of the LiDARs 101 to 105 has a to-be-cleaned sensor surface and at least one of the cameras 201 to 204 has a to-be-cleaned sensor surface, the drive assist ECU 80 activates the second pump 42 again, thereby cleaning the sensor surfaces of the cameras 201 to 204. Immediately after the sensor surfaces of the cameras 201 to 204 have been cleaned, the possibility that the sensor surfaces of the cameras 201 to 204 are determined to be "to-be-cleaned sensor surfaces" decreases. Therefore, the possibility that the sensor surfaces of the LiDARs 101 to 105 are cleaned is high.

Moreover, in the present embodiment, cleaning of the sensor surfaces of the cameras 201 to 204 is performed preferentially over cleaning of the sensor surfaces of the LiDARs 101 to 105. This mitigates strange feeling of a user (occupant) of the vehicle 10. Namely, since the drive assist ECU 80 displays the images captured by the cameras 201 to 204 on an unillustrated display unit, the user of the vehicle 10 may view the images captured by the cameras 201 to 204. Therefore, the user of the vehicle 10 easily notices dirt on the sensor surfaces of the cameras 201 to 204. In the case where the sensor surfaces of the cameras 201 to 204 are dirty, the user of the vehicle 10 may feel strange when viewing the images captured by the cameras 201 to 204. In view of this, cleaning of the sensor surfaces of the cameras 201 to 204 is performed preferentially over cleaning of the sensor surfaces of the LiDARs 101 to 105.

(Specific example 1)

As an example, there will be described operation for the case where the sensor surfaces of the right front lateral LiDAR 102, the right rear lateral LiDAR 103, and the rear camera 201 are to-be-cleaned sensor surfaces and the remaining sensor surfaces are clean sensor surfaces. Notably, in this example, the drive assist level is Lv1 or Lv2, or the drive assist control is not executed. In this case, since the number of sensor(s) corresponding to a clean sensor surface(s) is 1 in each of the third group, the fourth group, and the fifth group, the cleaning execution condition is satisfied. Furthermore, the sensors corresponding to the to-be-cleaned sensor surfaces include both a camera and LiDARs. Therefore, the drive assist ECU 80 first turns on the second activation relay 72 and maintains the second activation relay 72 in the on state for a predetermined time, thereby activating the second pump 42 for the predetermined time. As a result, the sensor surfaces of the cameras 201 to 204 are cleaned.

Subsequently, when the sensor surface dirtiness index value of the sensor surface of the rear camera 201 becomes less than the dirtiness determination threshold value as a result of cleaning, in each of the fourth group and the fifth group, the number of sensors corresponding to clean sensor surfaces becomes 2. Meanwhile, in the third group, since the sensor surfaces of the right front lateral LiDAR 102 and the right rear lateral LiDAR 103 have not yet been cleaned, these sensor surfaces are still to-be-cleaned sensor surfaces. Namely, in the third group, the number of sensor(s) corresponding to a clean sensor surface(s) is still 1. Therefore, even after the cleaning of the sensor surfaces of the cameras, the cleaning execution condition is still satisfied. Thus, the drive assist ECU 80 cleans the sensor surfaces of the LiDARs 101 to 105 by activating the first pump 41.

(Specific example 2)

As another example, there will be described operation for the case where both the sensor surface of the front camera 203 and the sensor surface of the rear camera 201 have been determined to be to-be-cleaned sensor surfaces and the remaining sensor surfaces have been determined to be clean sensor surfaces. Notably, in this example, the drive assist level is Lv1 or Lv2, or the drive assist control is not executed. In this case, there exists no group in which the number of sensor(s) corresponding to a sensor surface(s) determined to be a clean sensor surface(s) is 1 or less. Therefore, the cleaning execution condition is not satisfied. Accordingly, the drive assist ECU 80 does not execute the cleaning operation. Notably, since the object detection area of the front camera 203 and the object detection area of the rear camera 201 do not overlap each other, the front camera 203 and the rear camera 201 do not detect the same object simultaneously. As described above, in the case where the drive assist control is executed at the drive assist level Lv1 or Lv2, or the drive assist control is not executed, the drive assist ECU 80 does not execute the cleaning operation when it determines that only the sensor surfaces of a plurality of sensors which detect objects present at different positions are to-be-cleaned sensor surfaces.

(Specific operation of drive assist ECU)

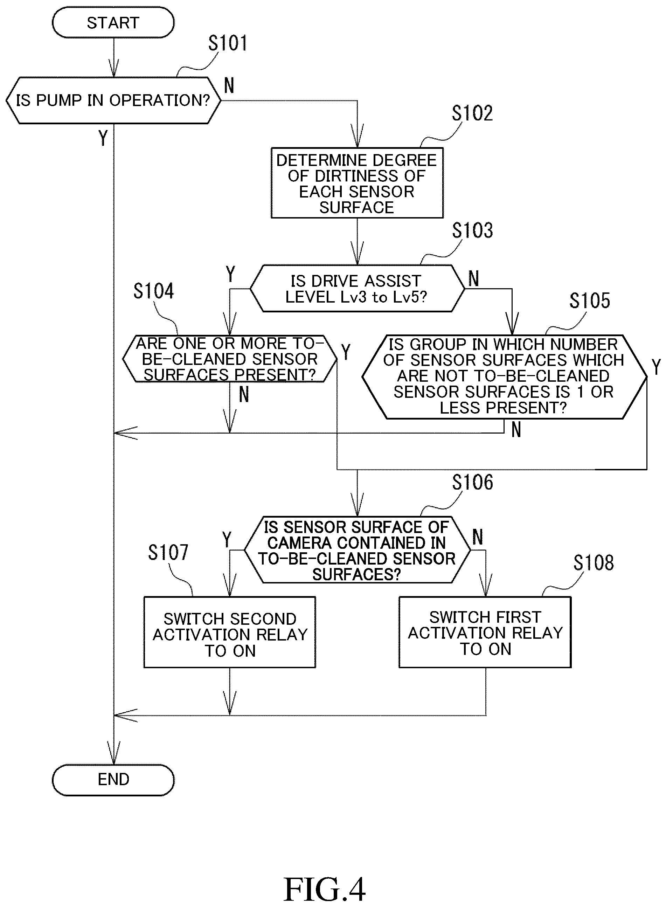

Next, specific operation of the drive assist ECU 80 will be described. In the following description, the CPU of the drive assist ECU 80 will be referred simply as the "CPU." The CPU executes a routine represented by a flowchart of FIG. 4 every time a predetermined time Δt1 elapses.

In step S101, the CPU determines whether or not one of the first pump 41 and the second pump 42 is in operation. In the case where the CPU determines that one of the first pump 41 and the second pump 42 is in operation, the CPU ends the current execution of this routine. In the case where the CPU determines that none of the first pump 41 and the second pump 42 is in operation, the CPU proceeds to step S102.

In step S102, the CPU obtains the sensor surface dirtiness index value of each sensor surface, determines whether or not each dirtiness index value is equal to or greater than a corresponding dirtiness determination threshold value (namely, whether or not each sensor surface is a to-be-cleaned sensor surface), and stores the determination result in the RAM. Subsequently, the CPU proceeds to step S103.

In step S103, the CPU determines whether or not the drive assist control is being executed at the drive assist level Lv3, Lv4, or Lv5. In the case where the CPU determines that the drive assist control is being executed at the drive assist level Lv3, Lv4, or Lv5, the CPU proceeds to step S104. In contrast, in the case where the drive assist control is not being executed at the drive assist level Lv3, Lv4, or Lv5, the CPU proceeds from step S103 to step S105. In addition, in the case where the CPU is executing the drive assist control at the drive assist level Lv1 or Lv2, the CPU proceeds from step S103 to step S105.

In step S104, the CPU determines whether or not one or more sensor surfaces determined to be to-be-cleaned sensor surfaces are present. Notably, in step S104, the CPU does not determine "whether or not one or more to-be-cleaned sensor surfaces are present in each group," but determines "whether or not one or more to-be-cleaned sensor surfaces are present in all the sensor surfaces of the LiDARs 101 to 105 and the cameras 201 to 204 irrespective of group." In the case where the CPU determines that one or more sensor surfaces determined to be to-be-cleaned sensor surfaces are present, the CPU proceeds from step S104 to step S106. In the case where the CPU determines that no sensor surface is determined to be a to-be-cleaned sensor surface, the CPU ends the current execution of this routine.

In contrast, in the case where the CPU proceeds to step S105, in step S105, the CPU determines whether or not one or more "groups in which the number of clean sensor surfaces (sensor surfaces not determined to be to-be-cleaned sensor surfaces) is equal to or less than the clean sensor surface threshold value" are present. In the case where the CPU determines that such a group(s) are present, the CPU proceeds from step S105 to step S106. In the case where the CPU determines that such a group(s) are not present, the CPU ends the current execution of this routine.

In step S106, the CPU determines whether or not one or more of the sensor surfaces of the cameras 201 to 204 are contained in the to-be-cleaned sensor surface(s). In the case where one or more of the sensor surfaces of the cameras 201 to 204 are contained in the to-be-cleaned sensor surface(s), the CPU proceeds to step S107. In the case where none of the sensor surfaces of the cameras 201 to 204 is contained in the to-be-cleaned sensor surface(s), the CPU proceeds to step S108.

In step S107, the CPU performs a process for setting the second activation relay 72 to the on state for the predetermined time (cleaning time for cameras) and then ends the current execution of this routine. As a result, the second pump 42 is driven (activated) for the cleaning time for cameras, whereby the sensor surfaces of the cameras 201 to 204 are cleaned.

In contrast, in the case where the CPU has proceeded to step S108, in step S108, the CPU performs a process for setting the first activation relay 71 to the on state for the predetermined time (cleaning time for LiDARs) and then ends the current execution of this routine. As a result, the first pump 41 is driven (activated) for the cleaning time for LiDARs, whereby the sensor surfaces of the LiDARs 101 to 105 are cleaned.

According to such a routine, the period during which the first pump 41 is activated and the period during which the second pump 42 is activated do not overlap each other. Namely, in the case where one of the first pump 41 and the second pump 42 is being activated, since an affirmative determination (Y) is made in step S101, any of the processes of step S107 and step S108 is not newly executed. Accordingly, at least one sensor whose sensor surface is not cleaned is present in each of the above-described groups. Therefore, all the above-described groups can detect objects present in their detection regions by using at least sensors whose sensor surfaces are not cleaned.

Moreover, in the case where "the sensor surfaces of one or more sensors among the LiDARs 101 to 105" and "the sensor surfaces of one or more sensors among the cameras 201 to 204" are contained in the to-be-cleaned sensor surfaces, the sensor surfaces of the cameras 201 to 204 are cleaned preferentially. Namely, in the case where any of the sensor surfaces of the cameras 201 to 204 is contained in the to-be-cleaned sensor surfaces, the CPU proceeds from step S106 to step S107, thereby cleaning the sensor surfaces of the cameras 201 to 204. When, as a result of the cleaning, the sensor surfaces of the cameras 201 to 204 are removed from the to-be-cleaned sensor surfaces, the CPU makes a negative determination ("N") when it proceeds to step S106 after that and proceeds to step S108, thereby cleaning the sensor surfaces of the LiDARs 101 to 105.

Notably, the CPU may execute the following routine, which is a modification of the above-described routine. In step S102, the CPU determines whether or not each sensor surface is a to-be-cleaned sensor surface. In the case where any of the sensor surfaces of the LiDARs 101 to 105 is contained in the sensor surface(s) determined to be a to-be-cleaned sensor surface(s), the CPU stores a "LiDAR sensor surface cleaning request." Similarly, in the case where any of the sensor surfaces of the cameras 201 to 204 is contained in the sensor surface(s) determined to be a to-be-cleaned sensor surface(s), the CPU stores a "camera sensor surface cleaning request."

Subsequently, in step S106, the CPU determines whether or not the camera sensor surface cleaning request is stored. In the case where the camera sensor surface cleaning request is stored, the CPU proceeds to step S107. At that time, the CPU deletes the stored "camera sensor surface cleaning request."

Meanwhile, in the case where the CPU determines in step S106 that the "camera sensor surface cleaning request" is not stored (namely, only the "LiDAR sensor surface cleaning request" is stored), the CPU proceeds from step S106 to step S108. At that time, the CPU deletes the stored "LiDAR sensor surface cleaning request."

<Second embodiment >

A second embodiment is an embodiment in which the number of pumps is larger and the number of nozzles connected to one pump is smaller as compared with the first embodiment. In the following description, elements identical with those of the first embodiment are denoted by the same reference numerals as those used in the first embodiment and their descriptions may be omitted (this also applies to the description of a third embodiment and the description of a fourth embodiment).

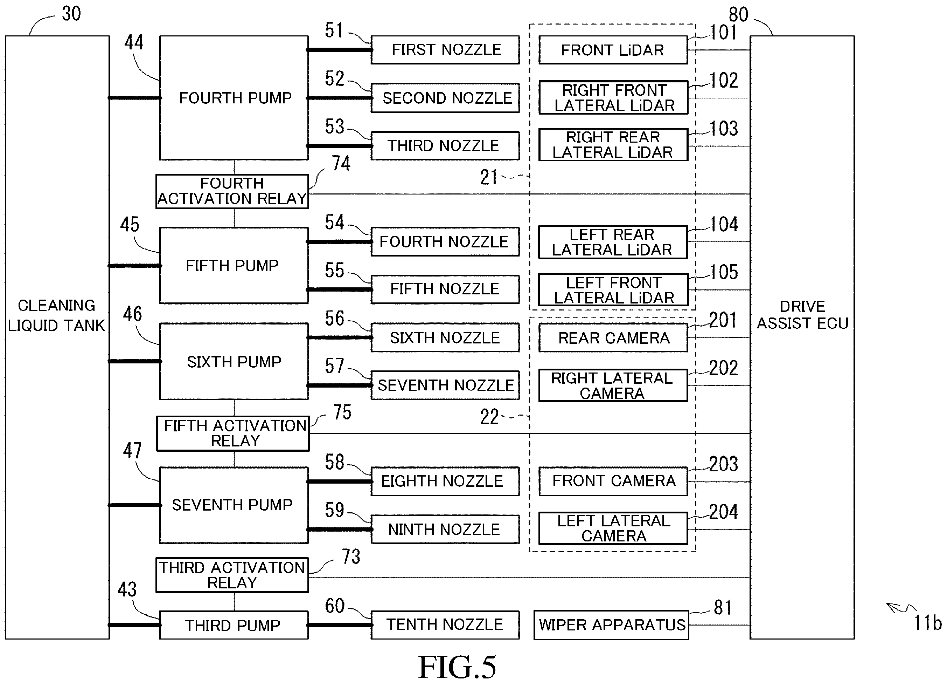

As shown in FIG. 5, a cleaning apparatus 11b according to the second embodiment includes a fourth pump 44 and a fifth pump 45 instead of the first pump 41 of the cleaning apparatus 11a according to the first embodiment. Similarly, the cleaning apparatus 11b includes a sixth pump 46 and a seventh pump 47 instead of the second pump 42. Furthermore, the cleaning apparatus 11b according to the second embodiment includes a fourth activation relay 74 instead of the first activation relay 71 and includes a fifth activation relay 75 instead of the second activation relay 72. Each of the fourth activation relay 74 and the fifth activation relay 75 is a normal-open-type activation relay. In this embodiment, the fourth pump 44, the fifth pump 45, and the fourth activation relay 74 are example of the first feed mechanism, and the sixth pump 46, the seventh pump 47, and the fifth activation relay 75 are example of the second feed mechanism of this invention.

The first nozzle 51, the second nozzle 52, and the third nozzle 53 are connected to the fourth pump 44. The fourth nozzle 54 and the fifth nozzle 55 are connected to the fifth pump 45. The sixth nozzle 56 and the seventh nozzle 57 are connected to the sixth pump 46. The eighth nozzle 58 and the ninth nozzle 59 are connected to the seventh pump 47.

In the present embodiment, by the fourth pump 44 and the fourth activation relay 74, the cleaning liquid is fed to the nozzles 51 to 53 which respectively jet the cleaning liquid against the sensor surfaces of the LiDARs 101 to 103, which are part of the first sensors 21. By the fifth pump 45 and the fourth activation relay 74, the cleaning liquid is fed to the nozzles 54 and 55 which respectively jet the cleaning liquid against the sensor surfaces of the LiDARs 104 and 105, which are part of the first sensors 21. Similarly, by the sixth pump 46 and the fifth activation relay 75, the cleaning liquid is fed to the nozzles 56 and 57 which respectively jet the cleaning liquid against the sensor surfaces of the cameras 201 and 202, which are part of the second sensors 22. Moreover, by the seventh pump 47 and the fifth activation relay 75, the cleaning liquid is fed to the nozzles 58 and 59 which respectively jet the cleaning liquid against the sensor surfaces of the cameras 203 and 204, which are part of the second sensors 22.

The fourth activation relay 74 switches between an on state and an off state in accordance with an instruction signal from the drive assist ECU 80. During a period during which the fourth activation relay 74 is in the off state, the fourth pump 44 and the fifth pump 45 do not operate. During a period during which the fourth activation relay 74 is in the on state, electric power is supplied to the fourth pump 44 and the fifth pump 45, whereby the fourth pump 44 and the fifth pump 45 operate. Namely, the fourth pump 44 and the fifth pump 45 operate simultaneously.

The fifth activation relay 75 switches between an on state and an off state in accordance with an instruction signal from the drive assist ECU 80. During a period during which the fifth activation relay 75 is in the off state, the sixth pump 46 and the seventh pump 47 do not operate. During a period during which the fifth activation relay 75 is in the on state, electric power is supplied to the sixth pump 46 and the seventh pump 47, whereby the sixth pump 46 and the seventh pump 47 operate. Namely, the sixth pump 46 and the seventh pump 47 operate simultaneously.

The drive assist ECU 80 does not set the fourth activation relay 74 and the fifth activation relay 75 to the on state simultaneously, and sets the fourth activation relay 74 and the fifth activation relay 75 to the on state selectively.

The drive assist ECU 80 of the second embodiment switches the fourth activation relay 74 to the on state instead of "switching the first activation relay 71 to the on state" in the first embodiment. Similarly, the drive assist ECU 80 of the second embodiment switches the fifth activation relay 75 to the on state instead of "switching the second activation relay 72 to the on state" in the first embodiment. Except for these points, the drive assist ECU 80 of the second embodiment operates in the same manner as the drive assist ECU 80 of the first embodiment.

This second embodiment achieves the same effect as the effect of the first embodiment. Furthermore, in the second embodiment, the number of nozzles connected to one pump is smaller as compared with the first embodiment. Therefore, the pressure and flow rate of the cleaning liquid jetted from each nozzle can be increased stably. In addition, in the second embodiment, since a plurality of pumps are activated by one activation relay, it is unnecessary to increase the number of activation relays with an increase in the number of pumps. Accordingly, an increase in the number of components can be suppressed as compared with a configuration in which one pump is activated by using one activation relay.

Notably, the number of nozzles connected to each pump is not limited to the numbers employed in the first and the second embodiments. For example, one or more nozzles (e.g., two nozzles) selected from the nozzles 51 to 55 may be connected to the fourth pump 44, and the remaining ones (e.g., three nozzles) of the nozzles 51 to 55 may be connected to the fifth pump 45. Similarly, one or more nozzles (e.g., one nozzle) selected from the nozzles 56 to 59 may be connected to the sixth pump 46, and the remaining ones (e.g., three nozzles) of the nozzles 56 to 59 may be connected to the seventh pump 47.

<Third embodiment>

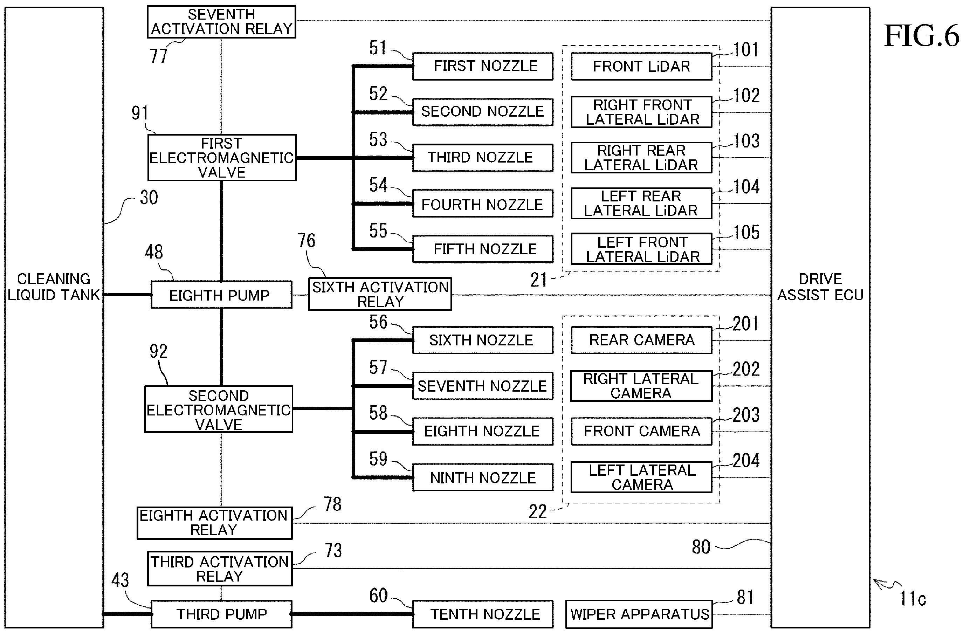

A third embodiment is an embodiment configured in such a manner that a single pump feeds the cleaning liquid to all "the nozzles which jet the cleaning liquid against the sensor surfaces." More specifically, as shown in FIG. 6, a cleaning apparatus 11c according to the third embodiment includes an eighth pump 48, a first electromagnetic valve 91, and a second electromagnetic valve 92 instead of the first pump 41 and the second pump 42 of the cleaning apparatus 11a according to the first embodiment.

Each of the first electromagnetic valve (a first flow passage open-close valve of an electromagnetic type) 91 and the second electromagnetic valve (a second flow passage open-close valve of an electromagnetic type) 92 is a normal-closed-type electromagnetic valve for opening and closing a flow passage. Namely, each of the first electromagnetic valve 91 and the second electromagnetic valve 92 maintains an internal flow passage in a shut-off (closed) state when no voltage is applied thereto and sets the internal flow passage in a liquid flowable (open) state during a period during which voltage is applied thereto (during a period during which electric power for operation is supplied thereto).

The eighth pump 48 has two discharge ports. One of the two discharge ports of the eighth pump 48 is connected to an inlet port of the internal flow passage of the first electromagnetic valve 91. An outlet port of the internal flow passage of the first electromagnetic valve 91 is connected to the first to fifth nozzles 51 to 55. The other of the two discharge ports of the eighth pump 48 is connected to an inlet port of the internal flow passage of the second electromagnetic valve 92. An outlet port of the internal flow passage of the second electromagnetic valve 92 is connected to the sixth to ninth nozzles 56 to 59.

Moreover, the cleaning apparatus 11c includes a sixth activation relay 76, a seventh activation relay 77, and an eighth activation relay 78 instead of the first activation relay 71 and the second activation relay 72 of the cleaning apparatus 11a according to the first embodiment. Each of these relays is a normal-open-type activation relay.

In the present embodiment, by the eighth pump 48, the sixth activation relay 76, the first electromagnetic valve 91, and the seventh activation relay 77, the cleaning liquid is fed to the nozzles 51 to 55 which respectively jet the cleaning liquid against the sensor surfaces of the LiDARs 101 to 105, which are the first sensors 21. Namely, the eighth pump 48, the sixth activation relay 76, the first electromagnetic valve 91, and the seventh activation relay 77 are example of the first feed mechanism. More specifically, when the sensor surfaces of the LiDARs 101 to 105 are to be cleaned, the drive assist ECU 80 switches the sixth activation relay 76 from the off state to the on state, thereby activating the eighth pump 48. Furthermore, the drive assist ECU 80 switches the seventh activation relay 77 from the off state to the on state, thereby applying voltage to the first electromagnetic valve 91. As a result, the state of the internal flow passage of the first electromagnetic valve 91 is changed to the liquid flowable state. Therefore, the cleaning liquid is fed from the eighth pump 48 to the nozzles 51 to 55 through the internal flow passage of the first electromagnetic valve 91. Thus, the sensor surfaces of the LiDARs 101 to 105 are cleaned.

In addition, in the present embodiment, by the eighth pump 48, the sixth activation relay 76, the second electromagnetic valve 92, and the eighth activation relay 78, the cleaning liquid is fed to the nozzles 56 to 59 which respectively jet the cleaning liquid against the sensor surfaces of the cameras 201 to 204, which are the second sensors 22. Namely, the eighth pump 48, the sixth activation relay 76, the second electromagnetic valve 92, and the eighth activation relay 78 are example of the second feed mechanism. More specifically, when the sensor surfaces of the cameras 201 to 204 are to be cleaned, the drive assist ECU 80 switches the sixth activation relay 76 from the off state to the on state, thereby activating the eighth pump 48. Furthermore, the drive assist ECU 80 switches the eighth activation relay 78 from the off state to the on state, thereby applying voltage to the second electromagnetic valve 92. As a result, the state of the internal flow passage of the second electromagnetic valve 92 is changed to the liquid flowable state. Therefore, the cleaning liquid is fed from the eighth pump 48 to the nozzles 56 to 59 through the internal flow passage of the second electromagnetic valve 92. Thus, the sensor surfaces of the cameras 201 to 204 are cleaned.

The drive assist ECU 80 of the third embodiment switches each of the sixth activation relay 76 and the seventh activation relay 77 to the on state instead of "switching the first activation relay 71 to the on state" in the first embodiment. Moreover, the drive assist ECU 80 switches each of the sixth activation relay 76 and the eighth activation relay 78 to the on state instead of "switching the second activation relay 72 to the on state" in the first embodiment. Except for these points, the drive assist ECU 80 of the third embodiment operates in the same manner as the drive assist ECU 80 of the first embodiment.

This third embodiment achieves the same effect as the effect of the first embodiment. Furthermore, in the third embodiment, the number of expensive pumps can be reduced as compared with the first embodiment and the second embodiment.

Notably, the seventh activation relay 77 and the eighth activation relay 78 may be replaced with a single three-contact relay which selectively changes the state of one of the first electromagnetic valve 91 and the second electromagnetic valve 92 to the liquid flowable (open) state.

<Fourth embodiment>

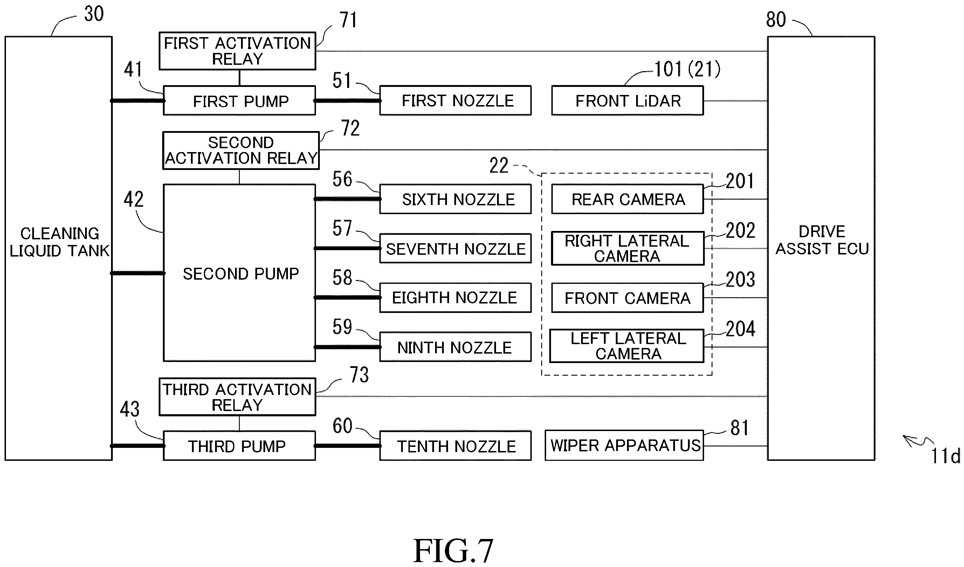

As shown in FIG. 7, a fourth embodiment is an embodiment which includes a fewer number of sensors as compared with the first embodiment to third embodiments. Specifically, a cleaning apparatus 11d according to the fourth embodiment does not include "the right front lateral LiDAR 102, the right rear lateral LiDAR 103, the left front lateral LiDAR 105, and the left rear lateral LiDAR 104," where are provided in the first embodiment. Namely, the cleaning apparatus 11d includes the single front LiDAR 101 as a first sensor 21 and includes "the rear camera 201, the right lateral camera 202, the front camera 203, and the left lateral camera 204" as second sensors 22. Accordingly, the cleaning apparatus 11d does not include the second nozzle 52 to the fifth nozzle 55 and includes the first nozzle 51 and the sixth nozzle 56 to the ninth nozzle 59. In the cleaning apparatus 11d, only the first nozzle 51 is connected to the first pump 41, and the sixth nozzle 56 to the ninth nozzle 59 are connected to the second pump 42.

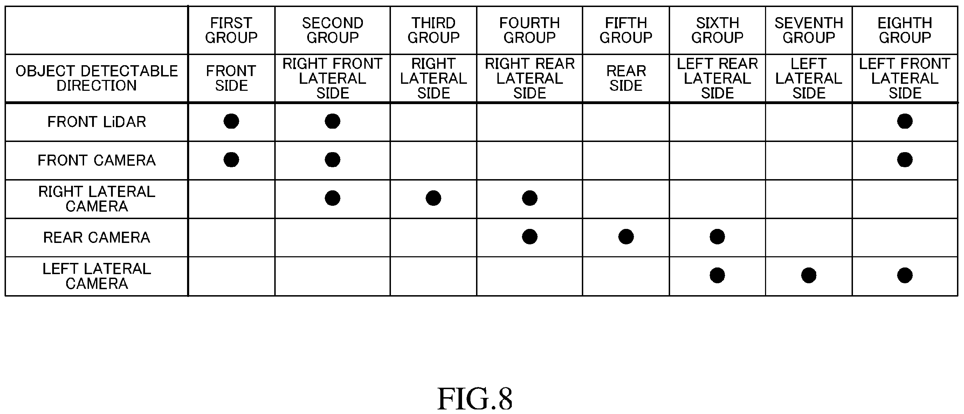

As shown in FIG. 8, the plurality of sensors are divided into a plurality of groups as in the case of the first embodiment. A first group is composed of the front LiDAR 101 and the front camera 203. In the first group, "the front LiDAR 101" and "the front camera 203" are sensors which are complementally with each other. A second group is composed of the front LiDAR 101, the front camera 203, and the right lateral camera 202. In the second group, "the front LiDAR 101" and "the right lateral camera 202 and the front camera 203" are sensors which are complementally with each other.

A third group is composed of the right lateral camera 202 only. A fourth group is composed of the right lateral camera 202 and the rear camera 201. A fifth group is composed of the rear camera 201 only. A sixth group is composed of the rear camera 201 and the left lateral camera 204. A seventh group is composed of the left lateral camera 204 only. Each of the third group to the seventh group does not include sensors which are complementally with each other.

An eighth group is composed of the front LiDAR 101, the front camera 203, and the left lateral camera 204. In the eighth group, "the front LiDAR 101" and "the front camera 203 and the left lateral camera 204 are sensors which are complementally with each other.

The drive assist ECU 80 of the fourth embodiment selectively activates one of the first pump 41 and the second pump 42. Namely, the drive assist ECU 80 does not activate the first pump 41 and the second pump 42 simultaneously. More specifically, cleaning of the sensor surfaces and detection of objects are performed as follows.

(1) Case where the first pump 41 is in operation

The front object $O_{Fr}$ cannot be detected by the front LiDAR 101 whose sensor surface is being cleaned. However, the front object $O_{Fr}$ can be detected by the front camera 203. The right front lateral object $O_{F-R}$ cannot be detected by the front LiDAR 101 whose sensor surface is being cleaned. However, the right front lateral object $O_{F-R}$ can be detected by the front camera 203 and the right lateral camera 202. The right lateral object $O_R$ can be detected by the right lateral camera 202. The right rear lateral object $O_{R-R}$ can be detected by the right lateral camera 202 and the rear camera 201. The rear object $O_{Rr}$ can be detected by the rear camera 201. The left rear lateral object $O_{R-L}$ can be detected by the rear camera 201 and the left lateral camera 204. The left lateral object $O_L$ can be detected by the left lateral camera 204. The left front lateral object $O_{F-L}$ cannot be detected by the front LiDAR 101 whose sensor surface is being cleaned. However, the left front lateral object $O_{F-L}$ can be detected by the front camera 203 and the left lateral camera 204.

(2) Case where the second pump 42 is in operation

In this case, the front LiDAR 101 can detect the left front lateral object $O_{F-L}$, the front object $O_{Fr}$, and the right front lateral object $O_{F-R}$. In contrast, all the cameras 201 to 204 each of which is being cleaned cannot detect objects. Namely, since each of the third group to the seventh group is composed of a camera(s) only, during a period during which the second pump 42 is in operation, objects present on the right lateral side, the right rear lateral side, the rear side, the left rear lateral side, and the left lateral side of the vehicle 10 cannot be detected.

(Sensor surface cleaning control)

The dirtiness determination threshold value and the clean sensor surface threshold value used in the sensor surface cleaning control of the cleaning apparatus 11d according to the fourth embodiment differ from those used in the sensor surface cleaning control of the cleaning apparatus 11a according to the first embodiment.

(Dirtiness determination threshold value)

In the fourth embodiment, the dirtiness determination threshold value is set in the following first manner or second manner.
First manner: The dirtiness determination threshold value is changed repeatedly in accordance with the result of detection of an object by each sensor.
The drive assist ECU 80 of the fourth embodiment obtains the number of objects which are detected by each sensor and whose distances from the vehicle 10 are equal to or shorter than a predetermined distance (hereinafter referred to as the "number of short distance objects"). In the case where the drive assist ECU 80 determines that the number of short distance objects is equal to or greater than a predetermined number (hereinafter referred to as the "object number threshold value"), the possibility that the vehicle 10 collides with these objects or gets very close to these objects is high. Therefore, in such a case, it is preferred that the drive assist ECU 80 detect the positional relationships between the vehicle 10 and these objects continuously (at high frequency). Therefore, in the case where the drive assist ECU 80 determines that the number of short distance objects is equal to or greater than the object number threshold value, the drive assist ECU 80 sets the dirtiness determination threshold value to a larger value as compared with the case where the number of short distance objects is less than the object number threshold value. As a result, the drive assist ECU 80 can clean the sensor surfaces in the case where the possibility that the vehicle 10 collides with these objects or gets very close to these objects is relatively low, and the drive assist ECU 80 can reduce the frequency of occurrence of a situation where object detection becomes impossible due to the cleaning operation in the case where the possibility that the vehicle 10 collides with these objects or gets very close to these objects is relatively high.
Second manner: The dirtiness determination threshold value used in the fourth embodiment is set to a value which is greater than the dirtiness determination threshold value used in the first embodiment.
In the first embodiment, even in a state in which the first pump 41 is operating, objects present in the surrounding region of the vehicle 10 can be detected by the cameras 201 to 204 whose sensor surfaces are not being cleaned. In contrast, in the fourth embodiment, in the case where the second pump 42 is in operation, since only the front LiDAR 101 can detect an object(s), the conditions of the surrounding region of the vehicle 10 cannot be grasped well. In view of this, in the fourth embodiment, by setting the dirtiness determination threshold value to a relatively large value, the frequency of occurrence of a situation where the conditions of the surrounding region of the vehicle 10 cannot be grasped is reduced.

(Clean sensor surface threshold value)

As described above, in the fourth embodiment, the third group is composed of the right lateral camera 202 only, the fifth group is composed of the rear camera 201 only, and the seventh group is composed of the left lateral camera 204 only. Namely, each of these groups (the third, fifth, and seventh groups) is composed of a single sensor only (hereinafter such a group will be referred to as a "single-sensor group"). In the case where the sensor surface of a sensor which belongs to a certain single-sensor group is determined to be a to-be-cleaned sensor surface, a sensor having a clean sensor surface (a sensor surface which is not a to-be-cleaned sensor surface) is not present in that certain single-sensor group. Therefore, in the fourth embodiment, the clean sensor surface threshold value is set to "0," and, in the case where one or more groups in which the number of clean sensor surfaces is equal to or less than the clean sensor surface threshold value (namely, "0"), the drive assist ECU 80 determines that the cleaning execution condition is satisfied. Notably, like the case where the drive assist level is Lv3 to Lv5 in the first embodiment, the drive assist ECU 80 may determine that the cleaning execution condition is satisfied, in the case where at least one sensor surface of all the sensor surfaces is a to-be-cleaned sensor surface.

(Specific operation)

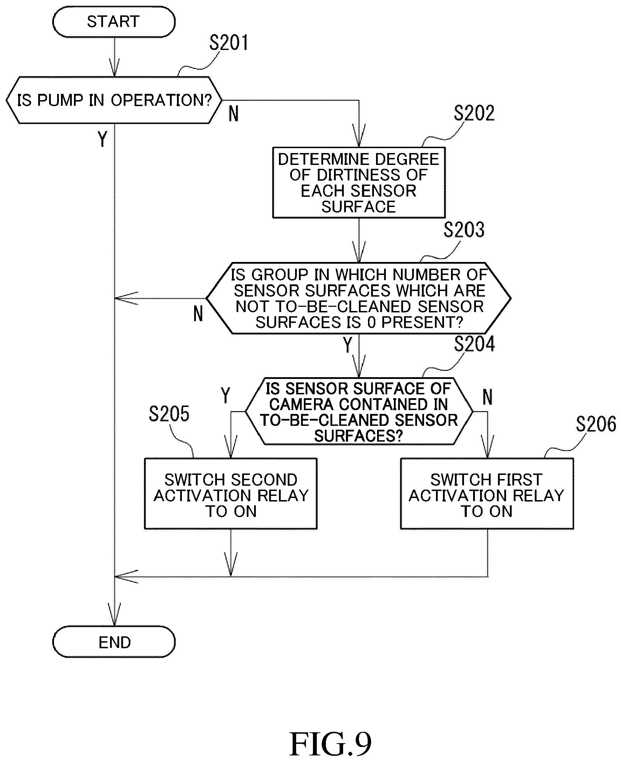

The CPU of the drive assist ECU 80 of the fourth embodiment executes a routine represented by a flowchart of FIG. 9 every time a predetermined time Δt1 elapses.

Steps S201 and S202 are the same as steps S101 and S102 of the first embodiment.

In step S203, the CPU determines whether or not a group in which the number of sensor surfaces not determined to be to-be-cleaned sensor surfaces (namely, the number of clean sensor surfaces) is equal to or less than "the clean sensor surface threshold value set to 0" is present. In the case where the CPU determines that such a group is present, the CPU proceeds to step S204. In the case where the CPU determines that such a group is not present, the CPU ends the current execution of this routine.

Steps S204, S205, and S206 are identical with steps S106, S107, and S108, respectively, of the first embodiment.

This routine can prevent or suppress the occurrence of a situation where "no clean sensor whose sensor surface is clean is present in each group." Namely, in the case where there exists a group in which no sensor surface is determined to be a clean sensor surface (namely, one or more surfaces are determined to be to-be-cleaned sensor surfaces), the CPU proceeds from step S204 to step S205 or step S206, whereby the sensor surfaces are cleaned. In the case where the CPU proceeds to step S206, the sensor surfaces of the cameras 201 to 204 are not cleaned, and therefore, at least one sensor whose sensor surface is not cleaned is present in each group. Meanwhile, even in the case where the CPU proceeds to step S205, since the front LiDAR 101 whose sensor surface is not cleaned is present in the first group, the second group, and the eighth group, objects on the front side, the right front lateral side, and the left front lateral side of the vehicle 10 can be detected.

The embodiments of the present invention have been described; however, the present invention is not limited to the above-described embodiments.

For example, the sensors which are complementary with each other are not limited to the above-described examples. For example, the vehicle 10 may include a plurality of LiDARs which can detect an object present in the same direction, and these LiDARs may constitute sensors which are complementary with each other. Similarly, the vehicle 10 may include a plurality of cameras which can detect an object present in the same direction, and these cameras may constitute sensors which are complementary with each other. Moreover, in each of the above-described embodiments, a configuration in which LiDARs belong to the first sensor group and cameras belong to the second sensor group is shown. However, the present invention is not limited to such a configuration. Namely, a LiDAR(s) and a camera(s) may belong to the first sensor group, and a camera(s) and a LiDAR(s) may belong to the second sensor group.

In the first embodiment, the cleaning execution condition is changed in accordance with the level of the drive assist control. However, the cleaning execution condition may be fixed irrespective of the level of the drive assist control.

The positions of the LiDARs 101 to 105 and the cameras 201 to 204 are not limited to the positions shown in the above-described embodiments. The object detectable areas (view angle ranges) of the LiDARs 101 to 105 and the cameras 201 to 204 are not limited to the above-described areas. The method for determining whether or not each sensor surface is a to-be-cleaned sensor surface is not limited to the above-described method.

In the first embodiment, there is shown a configuration in which the cleaning apparatus 11a includes one pump (the first pump 41) for feeding the cleaning liquid to the first nozzle 51 to the fifth nozzle 55 (namely, the sensor surfaces of all the first sensors 21) and another pump (the second pump 42) for feeding the cleaning liquid to the sixth nozzle 56 to the tenth nozzle 60 (namely, the sensor surfaces of all the second sensors 22). However, the present invention is not limited to such a configuration. Similarly, in the second embodiment, there is shown a configuration in which the cleaning apparatus 11b includes two pumps (the fourth pump 44 and the fifth pump 45) for feeding the cleaning liquid to the first nozzle 51 to the fifth nozzle 55 and other two pumps (the seventh pump 47 and the eighth pump 48) for feeding the cleaning liquid to the sixth nozzle 56 to the tenth nozzle 60. However, the present invention is not limited to such a configuration. For example, the cleaning apparatus may include one pump (the first pump 41) for feeding the cleaning liquid to the first nozzle 51 to the fifth nozzle 55 and other two pumps (the sixth pump 46 and the seventh pump 47) for feeding the cleaning liquid to the sixth nozzle 56 to the tenth nozzle 60. Alternatively, the cleaning apparatus may include two pumps (the fourth pump 44 and the fifth pump 45) for feeding the cleaning liquid to the first nozzle 51 to the fifth nozzle 55 and another pump (the second pump 42) for feeding the cleaning liquid to the sixth nozzle 56 to the tenth nozzle 60.

Each of the cleaning apparatuses 11a, 11b, 11c, and 11d may include a nozzle for jetting the cleaning liquid against the rear windshield of the vehicle 10 and a wiper apparatus for cleaning the rear windshield of the vehicle 10.

**Claims**

1. A cleaning apparatus (11a, 11b, 11c, 11d) for a vehicle (10) which includes a first sensor group (21), a second sensor group (22), a first jetting apparatus, a second jetting apparatus, a first feed mechanism (41, 71, 44, 45, 74, 48, 76, 91, 77), a second feed mechanism (42, 72, 46, 47, 75, 48, 76, 92, 78), and a control unit (80), wherein the cleaning apparatus is **characterized in that**:

   the first sensor group (21) is composed of only a LiDAR which serves as a first particular sensor (101) configured to obtain information of a first surrounding region which is part of a surrounding region of the vehicle (10) or is composed of a plurality of LiDARs which serve as sensors (101, 102, 103, 104, 105) configured to obtain information of the surrounding region and which include a LiDAR which serves as the first particular sensor (101), the second sensor group (22) is composed of a plurality of cameras which serve as sensors (201, 202, 203, 204) configured to obtain information of the surrounding region and which include a camera which serves as a second particular sensor (204) capable of obtaining information of the first surrounding region, the first jetting apparatus includes a single nozzle (51) disposed to face a sensor surface of the first particular sensor (101) or a plurality of nozzles (51, 52, 53, 54, 55) disposed to face respective sensor surfaces of the LiDAR(s) (101, 102, 103, 104, 105) belonging to the first sensor group (21), wherein, when a cleaning fluid is fed to the single nozzle or the plurality of nozzles, the single nozzle or each of the plurality of nozzles are configured to jet the cleaning fluid so as to clean the corresponding sensor surface, the second jetting apparatus includes a plurality of nozzles (56, 57, 58, 59) disposed to face respective sensor surfaces of the cameras (201, 202, 203, 204) belonging to the second sensor group (22), wherein, when the cleaning fluid is fed to the plurality of nozzles, each of the plurality of nozzles is configured to jet the cleaning fluid so as to clean the corresponding sensor surface, the first feed mechanism (41, 71, 44, 45, 74, 48, 76, 91, 77) is activated by electric power so as to feed the cleaning fluid to the first jetting apparatus; the second feed mechanism (42, 72, 46, 47, 75, 48, 76, 92, 78) is activated by electric power so as to feed the cleaning fluid to the second jetting apparatus; and the control unit controls activation of the first feed mechanism and activation of the second feed mechanism, and **in that** the control unit (80) is configured:

      to determine whether or not each of the sensor surface(s) of the LiDAR(s) (101, 102, 103, 104, 105) belonging to the first sensor group (21) and the sensor surfaces of the cameras (201, 202, 203, 204) belonging to the second sensor group (22) is a to-be-cleaned sensor surface which is dirty to an extent that requires cleaning, to determine whether or not a predetermined cleaning execution condition is satisfied on the basis of a result of the determination, to activate, when the cleaning execution condition is satisfied, the first feed mechanism (41, 71, 44, 45, 74, 48, 76, 91, 77) without activating the second feed mechanism (42, 72, 46, 47, 75, 48, 76, 92, 78) in the case where, although the LiDAR(s) (101, 102, 103, 104, 105) belonging to the first sensor group (21) have the to-be-cleaned sensor surface(s), the cameras (201, 202, 203, 204) belonging to the second sensor group (22) do not have the to-be-cleaned sensor surface, to activate, when the cleaning execution condition is satisfied, the second feed mechanism (42, 72, 46, 47, 75, 48, 76, 92, 78) without activating the first feed mechanism (41, 71, 44, 45, 74, 48, 76, 91, 77) in the case where, although the cameras (201, 202, 203, 204) belonging to the second sensor group (22) have the to-be-cleaned sensor surface(s), the LiDAR(s) (101, 102, 103, 104, 105) belonging to the first sensor group (21) do not have the to-be-cleaned sensor surface, and

to activate, when the cleaning execution condition is satisfied, the second feed mechanism (42, 72, 46, 47, 75, 48, 76, 92, 78) without activating the first feed mechanism (41, 71, 44, 45, 74, 48, 76, 91, 77) in the case where the LiDAR(s) (101, 102, 103, 104, 105) belonging to the first sensor group (21) have the to-be-cleaned sensor surface(s) and the cameras (201, 202, 203, 204) belonging to the second sensor group (22) have the to-be-cleaned sensor surface(s).

2. The cleaning apparatus (11a, 11d) according to claim 1, wherein

the first feed mechanism (41,71) includes a first pump (41) and is configured to feed the cleaning fluid to the first jetting apparatus when the first pump (41) is activated; and
the second feed mechanism (42, 72) includes a second pump (42) and is configured to feed the cleaning fluid to the second jetting apparatus when the second pump (42) is activated.

3. The cleaning apparatus (11b) according to claim 1, wherein the first feed mechanism (44, 45, 74) includes a first pump (44) and a second pump (45) and is configured to feed the cleaning fluid to one or more nozzles (51, 52, 53) which are part of the plurality of nozzles (51, 52, 53, 54, 55) belonging to the first jetting apparatus when the first pump (44) is activated and to feed the cleaning fluid to one or more nozzles (54, 55) which are the remaining nozzles of the plurality of nozzles (51, 52, 53, 54, 55) belonging to the first jetting apparatus when the second pump (45) is activated.

4. The cleaning apparatus (11b) according to claim 3, wherein the second feed mechanism (46, 47, 75) includes a third pump (46) and a fourth pump (47) and is configured to feed the cleaning fluid to one or more nozzles (56, 57) which are part of the plurality of nozzles (56, 57, 58, 59) belonging to the second jetting apparatus when the third pump (46) is activated and to feed the cleaning fluid to one or more nozzles (58, 59) which are the remaining nozzles of the plurality of nozzles (56, 57, 58, 59) belonging to the second jetting apparatus when the fourth pump (47) is activated.

5. The cleaning apparatus (11b) according to claim 1, wherein the second feed mechanism (46, 47, 75) includes a first pump (46) and a second pump (47 ) and is configured to feed the cleaning fluid to one or more nozzles (56, 57) which are part of the plurality of nozzles (56, 57, 58, 59) belonging to the second jetting apparatus when the first pump (46) is activated and to feed the cleaning fluid to one or more nozzles (58, 59) which are the remaining nozzles of the plurality of nozzles (56, 57, 58, 59) belonging to the second jetting apparatus when the second pump (47) is activated.

6. The cleaning apparatus (11c) according to claim 1, wherein

the first feed mechanism (48, 76, 91, 77) includes a pump (48) and a first flow passage open-close valve (91) of an electromagnetic type and is configured to feed the cleaning fluid to the first jetting apparatus when the pump (48) is activated and the first flow passage open-close valve (91) brings its internal flow passage into an open state; and
the second feed mechanism (48, 76, 92, 78) includes the pump (48) and a second flow passage open-close valve (92) of an electromagnetic type and is configured to feed the cleaning fluid to the second jetting apparatus when the pump (48) is activated and the second flow passage open-close valve (92) brings its internal flow passage into an open state.

7. The cleaning apparatus (11a, 11b 11c, 11d) according to any of claims 1 to 6, wherein the control unit (80) is configured:

to determine whether or not the number of clean sensor surfaces is equal to or less than a predetermined clean sensor surface threshold value, the clean sensor surfaces being sensor surfaces which are determined not to be the to-be-cleaned sensor surface among the sensor surface(s) of the LiDAR(s) (101, 102, 103, 104, 105) belonging to the first sensor group (21) and capable of obtaining information of a predetermined region which is part of the surrounding region of the vehicle (10) and the sensor surface(s) of the cameras (201, 202, 203, 204) belonging to the second sensor group (22) and capable of obtaining information of the predetermined region, and
to determine that the cleaning execution condition is satisfied in the case where the number of the clean sensor surfaces is determined to be equal to or less than the clean sensor surface threshold value.

8. The cleaning apparatus (11a, 11b, 11c, 11d) according to claim 7, wherein the control unit (80) is configured:

   to be capable of executing drive assist controls by using the LiDAR(s) (101, 102, 103, 104, 105) belonging to the first sensor group (21) and the cameras (201, 202, 203, 204) belonging to the second sensor group (22), the drive assist controls assisting a driver of the vehicle (10) in driving the vehicle,
   to determine that the cleaning execution condition is satisfied when the number of the clean sensor surfaces is determined to be equal to or less than the clean sensor surface threshold value, in the case where no drive assist control is being executed, and
   to determine that the cleaning execution condition is satisfied when at least one sensor has the to-be-cleaned sensor surface, in the case where a particular drive assist control among the drive assist controls is being executed.

9. The cleaning apparatus (11a, 11b, 11c, 11d) according to any of claims 1 to 8, wherein the first jetting apparatus includes:

   a nozzle (51) configured to jet the cleaning fluid against a sensor surface of a front LiDAR (101) which serves as the first particular sensor (101) and is configured to obtain information of regions located on a front side, a right front lateral side, and a left front lateral side, respectively, of the vehicle; and
   the second jetting apparatus includes:

      a nozzle (58) configured to jet the cleaning fluid against a sensor surface of a front camera (204) contained in the second sensor group (22) and configured to obtain information of regions located on the front side, the right front lateral side, and the left front lateral side, respectively, of the vehicle,
      a nozzle (56) configured to jet the cleaning fluid against a sensor surface of a rear camera (201) contained in the second sensor group (22) and configured to obtain information of regions located on a rear side, a right rear lateral side, and a left rear lateral side, respectively, of the vehicle (10),
      a nozzle (57) configured to jet the cleaning fluid against a sensor surface of a right lateral camera (202) contained in the second sensor group (22) and configured to obtain information of regions located on a right lateral side, a right front lateral side, and a right rear lateral side, respectively, of the vehicle, and
      a nozzle (59) configured to jet the cleaning fluid against a sensor surface of a left lateral camera (204) contained in the second sensor group (22) and configured to obtain information of regions located on a left lateral side, a left front lateral side, and a left rear lateral side, respectively, of the vehicle (10).

10. The cleaning apparatus (11a, 11b, 11c) according to claim 9, wherein the first jetting apparatus includes:

   a nozzle (52) configured to jet the cleaning fluid against a sensor surface of a right front lateral LiDAR (102) contained in the first sensor group (21) and configured to obtain information of regions located on the front side and the right front lateral side, respectively, of the vehicle (10),
   a nozzle (53) configured to jet the cleaning fluid against a sensor surface of a right rear lateral LiDAR (103) contained in the first sensor group (21) and configured to obtain information of regions located on the right rear lateral side, the rear side, and the right lateral side, respectively, of the vehicle (10),
   a nozzle (54) configured to jet the cleaning fluid against a sensor surface of a left rear lateral LiDAR (104) contained in the first sensor group (21) and configured to obtain information of regions located on the left rear lateral side, the rear side, and the left lateral side, respectively, of the vehicle (10), and
   a nozzle (55) configured to jet the cleaning fluid against a sensor surface of a left front lateral LiDAR (105) contained in the first sensor group (21) and configured to obtain information of regions located on the left front lateral side, the front side, and the left lateral side, respectively, of the vehicle (10).

**Patentansprüche**

1. Reinigungsvorrichtung (11a, 11b, 11c, 11d) für ein Fahrzeug (10), die eine erste Sensorgruppe (21), eine zweite Sensorgruppe (22), eine erste Sprühvorrichtung, eine zweite Sprühvorrichtung, einen ersten Zuführmechanismus (41, 71, 44, 45, 74, 48, 76, 91, 77), einen zweiten Zuführmechanismus (42, 72, 46, 47, 75, 48, 76, 92, 78) und eine Steuereinheit (80) umfasst, wobei die Reinigungsvorrichtung **dadurch gekennzeichnet ist, dass**:

   die erste Sensorgruppe (21) nur aus einem LiDAR besteht, das als ein erster konkreter Sensor (101) dazu ausgestaltet ist, Informationen über eine erste umgebende Region zu erhalten, die Teil einer umgebenden Region des Fahrzeuges (10) ist, oder aus mehreren LiDARs besteht, die als Sensoren (101, 102, 103, 104, 105) dazu ausgestaltet sind, Informationen über die umgebende Region zu erhalten, und die ein LiDAR umfassen, das als der erste konkrete Sensor (101) dient,

die zweite Sensorgruppe (22) aus mehreren Kameras besteht, die als Sensoren (201, 202, 203, 204) dienen und dazu ausgestaltet sind, Informationen über die umgebende Region zu erhalten, und die eine Kamera umfassen, die als ein zweiter konkreter Sensor (204) dient, der dazu in der Lage ist, Informationen über die erste umgebende Region zu erhalten,

die erste Sprühvorrichtung eine einzelne Düse (51), die einer Sensoroberfläche des ersten konkreten Sensors (101) zugewandt angeordnet ist, oder mehrere Düsen (51, 52, 53, 54, 55) umfasst, die jeweiligen Sensoroberflächen der/des LiDAR(s) (101, 102, 103, 104, 105) zugewandt angeordnet sind, die zu der ersten Sensorgruppe (21) gehören, wobei, wenn ein Reinigungsfluid der einzelnen Düse oder den mehreren Düsen zugeführt wird, die einzelne Düse oder jede der mehreren Düsen dazu ausgestaltet ist, das Reinigungsfluid zu versprühen, um die entsprechende Sensoroberfläche zu reinigen,

die zweite Sprühvorrichtung mehrere Düsen (56, 57, 58, 59) umfasst, die jeweiligen Sensoroberflächen der Kameras (201, 202, 203, 204) zugewandt angeordnet sind, die zu der zweiten Sensorgruppe (22) gehören, wobei, wenn das Reinigungsfluid den mehreren Düsen zugeführt wird, jede der mehreren Düsen dazu ausgestaltet ist, das Reinigungsfluid zu versprühen, um die entsprechende Sensoroberfläche zu reinigen,

der erste Zuführmechanismus (41, 71, 44, 45, 74, 48, 76, 91, 77) durch elektrische Energie aktiviert wird, um das Reinigungsfluid der ersten Sprühvorrichtung zuzuführen,

der zweite Zuführmechanismus (42, 72, 46, 47, 75, 48, 76, 92, 78) durch elektrische Energie aktiviert wird, um das Reinigungsfluid der zweiten Sprühvorrichtung zuzuführen, und

die Steuereinheit die Aktivierung des ersten Zuführmechanismus und Aktivierung des zweiten Zuführmechanismus steuert,

und dass die Steuereinheit (80) dazu ausgestaltet ist:

zu bestimmen, ob jede der Sensoroberflächen der/des LiDAR(s) (101, 102, 103, 104, 105), die zu der ersten Sensorgruppe (21) gehören, und der Sensoroberflächen der Kameras (201, 202, 203, 204), die zu der zweiten Sensorgruppe (22) gehören, eine zu reinigende Sensoroberfläche ist oder nicht, die ausreichend schmutzig ist, dass sie einer Reinigung bedarf,

zu bestimmen, ob eine vorbestimmte Reinigungsausführungsbedingung auf der Basis eines Ergebnisses der Bestimmung erfüllt ist oder nicht,

wenn die Reinigungsausführungsbedingung erfüllt ist, den ersten Zuführmechanismus (41, 71, 44, 45, 74, 48, 76, 91, 77) ohne Aktivieren des zweiten Zuführmechanismus (42, 72, 46, 47, 75, 48, 76, 92, 78) in dem Fall zu aktivieren, in dem, auch wenn das/die LiDAR(s) (101, 102, 103, 104, 105), das/die zu der ersten Sensorgruppe (21) gehört/en, die zu reinigende(n) Sensoroberfläche(n) aufweist/en, die Kameras (201, 202, 203, 204), die zu der zweiten Sensorgruppe (22) gehören, die zu reinigende Sensoroberfläche nicht aufweisen,

wenn die Reinigungsausführungsbedingung erfüllt ist, den zweiten Zuführmechanismus (42, 72, 46, 47, 75, 48, 76, 92, 78) ohne Aktivieren des ersten Zuführmechanismus (41, 71, 44, 45, 74, 48, 76, 91, 77) in dem Fall zu aktivieren, in dem, auch wenn die Kameras (201, 202, 203, 204), die zu der zweiten Sensorgruppe (22) gehören, die zu reinigende(n) Sensoroberfläche(n) aufweisen, das/die LiDAR(s) (101, 102, 103, 104, 105), das/die zu der ersten Sensorgruppe (21) gehört/en, die zu reinigende Sensoroberfläche nicht aufweist/en, und

wenn die Reinigungsausführungsbedingung erfüllt ist, den zweiten Zuführmechanismus (42, 72, 46, 47, 75, 48, 76, 92, 78) ohne Aktivieren des ersten Zuführmechanismus (41, 71, 44, 45, 74, 48, 76, 91, 77) in dem Fall zu aktivieren, in dem das/die LiDAR(s) (101, 102, 103, 104, 105), das/die zu der ersten Sensorgruppe (21) gehört/en, die zu reinigende(n) Sensoroberfläche(n) aufweist/en, und die Kameras (201, 202, 203, 204), die zu der zweiten Sensorgruppe (22) gehören, die zu reinigende(n) Sensoroberfläche(n) aufweisen.

2. Reinigungsvorrichtung (11a, 11d) nach Anspruch 1, wobei

der erste Zuführmechanismus (41, 71) eine erste Pumpe (41) umfasst und dazu ausgestaltet ist, das Reinigungsfluid der ersten Sprühvorrichtung zuzuführen, wenn die erste Pumpe (41) aktiviert ist, und

der zweite Zuführmechanismus (42, 72) eine zweite Pumpe (42) umfasst und dazu ausgestaltet ist, das Reinigungsfluid der zweiten Sprühvorrichtung zuzuführen, wenn die zweite Pumpe (42) aktiviert ist.

3. Reinigungsvorrichtung (11b) nach Anspruch 1, wobei der erste Zuführmechanismus (44, 45, 74) eine erste Pumpe (44) und eine zweite Pumpe (45) umfasst und dazu ausgestaltet ist, das Reinigungsfluid einer oder mehreren Düsen (51, 52, 53) zuzuführen, die Teil der mehreren Düsen (51, 52, 53, 54, 55) ist/sind, die zu der ersten Sprühvorrichtung gehören, wenn die erste Pumpe (44) aktiviert ist, und das Reinigungsfluid einer oder mehreren Düsen (54, 55) zuzuführen, welche die restlichen Düsen der mehreren Düsen (51, 52, 53, 54, 55) ist/sind, die zu der ersten Sprühvorrichtung gehören, wenn die zweite Pumpe (45) aktiviert ist.

4. Reinigungsvorrichtung (11b) nach Anspruch 3, wobei der zweite Zuführmechanismus (46, 47, 75) eine dritte Pumpe (46) und eine vierte Pumpe (47) umfasst und dazu ausgestaltet ist, das Reinigungsfluid einer oder mehreren Düsen (56, 57) zuzuführen, die Teil der mehreren Düsen (56, 57, 58, 59) ist/sind, die zu der zweiten Sprühvorrichtung gehören, wenn die dritte Pumpe (46) aktiviert ist, und das Reinigungsfluid einer oder mehreren Düsen (58, 59) zuzuführen, welche die restlichen Düsen der mehreren Düsen (56, 57, 58, 59) ist/sind, die zu der zweiten Sprühvorrichtung gehören, wenn die vierte Pumpe (47) aktiviert ist.

5. Reinigungsvorrichtung (11b) nach Anspruch 1, wobei der zweite Zuführmechanismus (46, 47, 75) eine erste Pumpe (46) und eine zweite Pumpe (47) umfasst und dazu ausgestaltet ist, das Reinigungsfluid einer oder mehreren Düsen (56, 57) zuzuführen, die Teil der mehreren Düsen (56, 57, 58, 59) ist/sind, die zu der zweiten Sprühvorrichtung gehören, wenn die erste Pumpe (46) aktiviert ist, und das Reinigungsfluid einer oder mehreren Düsen (58, 59) zuzuführen, welche die restlichen Düsen der mehreren Düsen (56, 57, 58, 59) ist/sind, die zu der zweiten Sprühvorrichtung gehören, wenn die zweite Pumpe (47) aktiviert ist.

6. Reinigungsvorrichtung (11c) nach Anspruch 1, wobei

der erste Zuführmechanismus (48, 76, 91, 77) eine Pumpe (48) und ein erstes Strömungsdurchgangs-Öffnungs-/Schließventil (91) vom elektromagnetischen Typ umfasst und dazu ausgestaltet ist, das Reinigungsfluid der ersten Sprühvorrichtung zuzuführen, wenn die Pumpe (48) aktiviert ist und das erste Strömungsdurchgangs-Öffnungs-/Schließventil (91) seinen inneren Strömungsdurchgang in einen offenen Zustand versetzt, und der zweite Zuführmechanismus (48, 76, 92, 78) die Pumpe (48) und ein zweites Strömungsdurchgangs-Öffnungs-/Schließventil (92) vom elektromagnetischen Typ umfasst und dazu ausgestaltet ist, das Reinigungsfluid der zweiten Sprühvorrichtung zuzuführen, wenn die Pumpe (48) aktiviert ist und das zweite Strömungsdurchgangs-Öffnungs-/Schließventil (92) seinen inneren Strömungsdurchgang in einen offenen Zustand versetzt.

7. Reinigungsvorrichtung (11a, 11b, 11c, 11d) nach einem der Ansprüche 1 bis 6, wobei die Steuereinheit (80) dazu ausgestaltet ist:

zu bestimmen, ob die Anzahl von sauberen Sensoroberflächen gleich oder kleiner als ein vorbestimmter Schwellenwert für saubere Sensoroberflächen ist oder nicht, wobei die sauberen Sensoroberflächen Sensoroberflächen sind, die dazu bestimmt sind, nicht die zu reinigende Sensoroberfläche unter den Sensoroberflächen des/der LiDAR(s) (101, 102, 103, 104, 105) zu sein, die zu der ersten Sensorgruppe (21) gehören und dazu in der Lage sind, Informationen über eine vorbestimmte Region zu erhalten, die Teil der umgebenden Region des Fahrzeugs (10) ist, und den Sensoroberflächen der Kameras (201, 202, 203, 204), die zu der zweiten Sensorgruppe (22) gehören und dazu in der Lage sind, Informationen über die vorbestimmte Region zu erhalten, und zu bestimmen, dass die Reinigungsausführungsbedingung in dem Fall erfüllt ist, in dem die Anzahl der sauberen Sensoroberflächen als gleich oder kleiner als der Schwellenwert für saubere Sensoroberflächen bestimmt wird.

8. Reinigungsvorrichtung (11a, 11b, 11c, 11d) nach Anspruch 7, wobei die Steuereinheit (80) dazu ausgestaltet ist:

in der Lage zu sein, Fahrassistenzsteuerungen unter Verwendung des/der LiDAR(s) (101, 102, 103, 104, 105), das/die zu der ersten Sensorgruppe (21) gehört/en, und der Kameras (201, 202, 203, 204), die zu der zweiten Sensorgruppe (22) gehören, auszuführen, wobei die Fahrassistenzsteuerungen einen Fahrer des Fahrzeugs (10) beim Fahren des Fahrzeugs unterstützen, zu bestimmen, dass die Reinigungsausführungsbedingung erfüllt ist, wenn die Anzahl der sauberen Sensoroberflächen als gleich oder kleiner als der Schwellenwert für saubere Sensoroberflächen bestimmt wird, in dem Fall, in dem keine Fahrassistenzsteuerung ausgeführt wird, und zu bestimmen, dass die Reinigungsausführungsbedingung erfüllt ist, wenn mindestens ein Sensor die zu reinigende Sensoroberfläche in dem Fall aufweist, in dem eine konkrete Fahrassistenzsteuerung unter den Fahrassistenzsteuerungen ausgeführt wird.

9. Reinigungsvorrichtung (11a, 11b, 11c, 11d) nach einem der Ansprüche 1 bis 8, wobei die erste Sprühvorrichtung umfasst:

eine Düse (51), die dazu ausgestaltet ist, das Reinigungsfluid gegen eine Sensoroberfläche eines Front-LiDAR (101) zu sprühen, das als der erste konkrete Sensor (101) dient und dazu ausgestaltet ist, Informationen über Regionen zu erhalten, die sich auf einer Vorderseite, einer rechten Vorderseite bzw. einer linken Vorderseite des Fahrzeugs befinden, und
die zweite Sprühvorrichtung umfasst:

eine Düse (58), die dazu ausgestaltet ist, das Reinigungsfluid gegen eine Sensoroberfläche einer Frontkamera (204) zu sprühen, die in der zweiten Sensorgruppe (22) enthalten und dazu ausgestaltet ist, Informationen über Regionen zu erhalten, die sich auf der Vorderseite, der rechten Vorderseite bzw. der linken Vorderseite des Fahrzeugs befinden,
eine Düse (56), die dazu ausgestaltet ist, das Reinigungsfluid gegen eine Sensoroberfläche einer Rückkamera (201) zu sprühen, die in der zweiten Sensorgruppe (22) enthalten und dazu ausgestaltet ist, Informationen über Regionen zu erhalten, die sich auf einer Rückseite, einer rechten Rückseite bzw. einer linken Rückseite des Fahrzeugs (10) befinden,
eine Düse (57), die dazu ausgestaltet ist, das Reinigungsfluid gegen eine Sensoroberfläche einer rechten seitlichen Kamera (202) zu sprühen, die in der zweiten Sensorgruppe (22) enthalten und dazu ausgestaltet ist, Informationen über Regionen zu erhalten, die sich auf einer rechten Seite, einer rechten Vorderseite bzw. einer rechten Rückseite des Fahrzeugs befinden, und
eine Düse (59), die dazu ausgestaltet ist, das Reinigungsfluid gegen eine Sensoroberfläche einer linken seitlichen Kamera (204) zu sprühen, die in der zweiten Sensorgruppe (22) enthalten und dazu ausgestaltet ist, Informationen über Regionen zu erhalten, die sich auf einer linken Seite, einer linken Vorderseite bzw. einer linken Rückseite des Fahrzeugs (10) befinden.

10. Reinigungsvorrichtung (11a, 11b, 11c) nach Anspruch 9, wobei die erste Sprühvorrichtung umfasst:

eine Düse (52), die dazu ausgestaltet ist, das Reinigungsfluid gegen eine Sensoroberfläche eines rechten seitlichen Front-LiDAR (102) zu sprühen, das in der ersten Sensorgruppe (21) enthalten und dazu ausgestaltet ist, Informationen über Regionen zu erhalten, die sich auf der Vorderseite bzw. der rechten Vorderseite des Fahrzeugs (10) befinden,
eine Düse (53), die dazu ausgestaltet ist, das Reinigungsfluid gegen eine Sensoroberfläche eines rechten seitlichen Rück-LiDAR (103) zu sprühen, das in der ersten Sensorgruppe (21) enthalten und dazu ausgestaltet ist, Informationen über Regionen zu erhalten, die sich auf der rechten Rückseite, der Rückseite bzw. der rechten Seite des Fahrzeugs (10) befinden,
eine Düse (54), die dazu ausgestaltet ist, das Reinigungsfluid gegen eine Sensoroberfläche eines linken seitlichen Rück-LiDAR (104) zu sprühen, das in der ersten Sensorgruppe (21) enthalten und dazu ausgestaltet ist, Informationen über Regionen zu erhalten, die sich auf der linken Rückseite, der Rückseite bzw. der linken Seite des Fahrzeugs (10) befinden, und
eine Düse (55), die dazu ausgestaltet ist, das Reinigungsfluid gegen eine Sensoroberfläche eines linken seitlichen Front-LiDAR (105) zu sprühen, das in der ersten Sensorgruppe (21) enthalten und dazu ausgestaltet ist, Informationen über Regionen zu erhalten, die sich auf der linken Vorderseite, der Vorderseite bzw. der linken Seite des Fahrzeugs (10) befinden.

**Revendications**

1. Appareil de nettoyage (11a, 11b, 11c, 11d) pour un véhicule (10) qui comprend un premier groupe de capteurs (21), un deuxième groupe de capteurs (22), un premier appareil d'éjection, un deuxième appareil d'éjection, un premier mécanisme d'alimentation (41, 71, 44, 45, 74, 48, 76, 91, 77), un deuxième mécanisme d'alimentation (42, 72, 46, 47, 75, 48, 76, 92, 78), et une unité de commande (80), l'appareil de nettoyage étant **caractérisé en ce que** :

le premier groupe de capteurs (21) se compose de seulement un LiDAR qui sert de premier capteur particulier (101) configuré pour obtenir de l'information d'une première zone environnante qui fait partie d'une zone environnante du véhicule (10) ou se compose d'une pluralité de LiDARs qui servent de capteurs (101, 102, 103, 104, 105) configurés pour obtenir de l'information de la zone environnante et qui comprend un LiDAR qui sert de premier capteur particulier (101),
le deuxième groupe de capteurs (22) se compose d'une pluralité de caméras qui servent de capteurs (201, 202, 203, 204) configurés pour obtenir de l'information de la zone environnante et qui comprend une caméra qui sert de deuxième capteur particulier (204) capable d'obtenir de l'information de la première zone environnante,

le premier appareil d'éjection comprend une unique buse (51) disposée pour faire face à une surface de capteur du premier capteur particulier (101) ou une pluralité de buses (51, 52, 53, 54, 55) disposées pour faire face à des surfaces de capteur respectives du ou des LiDAR(s) (101, 102, 103, 104, 105) appartenant au premier groupe de capteurs (21), la buse unique ou chaque buse de la pluralité de buses étant configurées pour éjecter le fluide de nettoyage de façon à nettoyer la surface de capteur correspondante quand un fluide de nettoyage est délivré à la buse unique ou à la pluralité de buses,

le deuxième appareil d'éjection comprend une pluralité de buses (56, 57, 58, 59) disposées pour faire face à des surfaces de capteur respectives des caméras (201, 202, 203, 204) appartenant au deuxième groupe de capteurs (22), chaque buse de la pluralité de buses étant configurée pour éjecter le fluide de nettoyage de façon à nettoyer la surface de capteur correspondante quand le fluide de nettoyage est délivré à la pluralité de buses,

le premier mécanisme d'alimentation (41, 71, 44, 45, 74, 48, 76, 91, 77) est activé par de l'énergie électrique de façon à délivrer le fluide de nettoyage au premier appareil d'éjection ;

le deuxième mécanisme d'alimentation (42, 72, 46, 47, 75, 48, 76, 92, 78) est activé par de l'énergie électrique de façon à délivrer le fluide de nettoyage au deuxième appareil d'éjection ; et

l'unité de commande commande une activation du premier mécanisme d'alimentation et une activation du deuxième mécanisme d'alimentation,

et **en ce que** l'unité de commande (80) est configurée :

pour déterminer si chacune de la ou des surfaces de capteur du ou des LiDAR(s) (101, 102, 103, 104, 105) appartenant au premier groupe de capteurs (21) et des surfaces de capteur des caméras (201, 202, 203, 204) appartenant au deuxième groupe de capteurs (22) est une surface de capteur devant être nettoyée qui est sale dans une mesure qui nécessite un nettoyage ou pas,

pour déterminer si une condition d'exécution de nettoyage prédéterminée est satisfaite ou non sur la base d'un résultat de la détermination,

pour activer, quand la condition d'exécution de nettoyage est satisfaite, le premier mécanisme d'alimentation (41, 71, 44, 45, 74, 48, 76, 91, 77) sans activer le deuxième mécanisme d'alimentation (42, 72, 46, 47, 75, 48, 76, 92, 78) dans le cas où, bien que la ou les LiDAR(s) (101, 102, 103, 104, 105) appartenant au premier groupe de capteurs (21) aient la ou les surfaces de capteur devant être nettoyées, les caméras (201, 202, 203, 204) appartenant au deuxième groupe de capteurs (22) n'ont pas la surface de capteur devant être nettoyée,

pour activer, quand la condition d'exécution de nettoyage est satisfaite, le deuxième mécanisme d'alimentation (42, 72, 46, 47, 75, 48, 76, 92, 78) sans activer le premier mécanisme d'alimentation (41, 71, 44, 45, 74, 48, 76, 91, 77) dans le cas où, bien que les caméras (201, 202, 203, 204) appartenant au deuxième groupe de capteurs (22) aient la ou les surfaces de capteur devant être nettoyées, le ou les LiDAR(s) (101, 102, 103, 104, 105) appartenant au premier groupe de capteurs (21) n'ont pas la surface de capteur devant être nettoyée, et

pour activer, quand la condition d'exécution de nettoyage est satisfaite, le deuxième mécanisme d'alimentation (42, 72, 46, 47, 75, 48, 76, 92, 78) sans activer le premier mécanisme d'alimentation (41, 71, 44, 45, 74, 48, 76, 91, 77) dans le cas où le ou les LiDAR(s) (101, 102, 103, 104, 105) appartenant au premier groupe de capteurs (21) ont la ou les surfaces de capteur devant être nettoyées et les caméras (201, 202, 203, 204) appartenant au deuxième groupe de capteurs (22) ont la ou les surfaces de capteur devant être nettoyées.

2. Appareil de nettoyage (11a, 11d) selon la revendication 1, dans lequel

le premier mécanisme d'alimentation (41, 71) comprend une première pompe (41) et est configuré pour délivrer le fluide de nettoyage au premier appareil d'éjection quand la première pompe (41) est activée ; et

le deuxième mécanisme d'alimentation (42, 72) comprend une deuxième pompe (42) et est configuré pour délivrer le fluide de nettoyage au deuxième appareil d'éjection quand la deuxième pompe (42) est activée.

3. Appareil de nettoyage (11b) selon la revendication 1, dans lequel le premier mécanisme d'alimentation (44, 45, 74) comprend une première pompe (44) et une deuxième pompe (45) et est configuré pour délivrer le fluide de nettoyage à une ou plusieurs buses (51, 52, 53) qui font partie de la pluralité de buses (51, 52, 53, 54, 55) appartenant au premier appareil d'éjection quand la première pompe (44) est activée et pour délivrer le fluide de nettoyage à une ou plusieurs buses (54, 55) qui sont les buses restantes de la pluralité de buses (51, 52, 53, 54, 55) appartenant au premier appareil d'éjection quand la deuxième pompe (45) est activée.

4. Appareil de nettoyage (11b) selon la revendication 3, dans lequel le deuxième mécanisme d'alimentation (46, 47, 75) comprend une troisième pompe (46) et une quatrième pompe (47) et est configuré pour délivrer le fluide de nettoyage à une ou plusieurs buses (56, 57) qui font partie de la pluralité de buses (56, 57, 58, 59) appartenant au deuxième appareil d'éjection quand la troisième pompe (46) est activée et pour délivrer le fluide de nettoyage à une ou plusieurs buses (58, 59) qui sont les buses restantes de la pluralité de buses (56, 57, 58, 59) appartenant au deuxième appareil d'éjection quand la quatrième pompe (47) est activée.

5. Appareil de nettoyage (11b) selon la revendication 1, dans lequel le deuxième mécanisme d'alimentation (46, 47, 75) comprend une première pompe (46) et une deuxième pompe (47) et est configuré pour délivrer le fluide de nettoyage à une ou plusieurs buses (56, 57) qui font partie de la pluralité de buses (56, 57, 58, 59) appartenant au deuxième appareil d'éjection quand la première pompe (46) est activée et pour délivrer le fluide de nettoyage à une ou plusieurs buses (58, 59) qui sont les buses restantes de la pluralité de buses (56, 57, 58, 59) appartenant au deuxième appareil d'éjection quand la deuxième pompe (47) est activée.

6. Appareil de nettoyage (11c) selon la revendication 1, dans lequel

le premier mécanisme d'alimentation (48, 76, 91, 77) comprend une pompe (48) et une première soupape d'ouverture-fermeture de passage d'écoulement (91) du type électromagnétique et est configuré pour délivrer le fluide de nettoyage au premier appareil d'éjection quand la pompe (48) est activée et la première soupape d'ouverture-fermeture de passage d'écoulement (91) amène son passage d'écoulement interne dans un état ouvert ; et
le deuxième mécanisme d'alimentation (48, 76, 92, 78) comprend la pompe (48) et une deuxième soupape d'ouverture-fermeture de passage d'écoulement (92) du type électromagnétique et est configuré pour délivrer le fluide de nettoyage au deuxième appareil d'éjection quand la pompe (48) est activée et la deuxième soupape d'ouverture-fermeture de passage d'écoulement (92) amène son passage d'écoulement interne dans un état ouvert.

7. Appareil de nettoyage (11a, 11b 11c, 11d) selon l'une quelconque des revendications 1 à 6, dans lequel l'unité de commande (80) est configurée :

pour déterminer si le nombre de surfaces de capteur propres est ou non égal ou inférieur à une valeur de seuil de surface de capteur propre prédéterminée, les surfaces de capteur propres étant des surfaces de capteur qui sont déterminées pour ne pas être la surface de capteur devant être nettoyée parmi la ou les surfaces de capteur du LiDAR(s) (101, 102, 103, 104, 105) appartenant au premier groupe de capteurs (21) et capables d'obtenir de l'information d'une zone prédéterminée qui fait partie de la zone environnante du véhicule (10) et la ou les surfaces de capteur des caméras (201, 202, 203, 204) appartenant au deuxième groupe de capteurs (22) et capables d'obtenir de l'information de la zone prédéterminée, et
pour déterminer que la condition d'exécution de nettoyage est satisfaite dans le cas où le nombre de surfaces de capteur propres est déterminé comme étant égal ou inférieur à la valeur de seuil de surface de capteur propre.

8. Appareil de nettoyage (11a, 11b, 11c, 11d) selon la revendication 7, dans lequel l'unité de commande (80) est configurée :

pour être capable d'exécuter des commandes d'aide à la conduite en utilisant le ou les LiDAR(s) (101, 102, 103, 104, 105) appartenant au premier groupe de capteurs (21) et les caméras (201, 202, 203, 204) appartenant au deuxième groupe de capteurs (22), les commandes d'aide à la conduite aidant un conducteur du véhicule (10) à conduire le véhicule,
pour déterminer que la condition d'exécution de nettoyage est satisfaite quand le nombre de surfaces de capteur propres est déterminé comme étant égal ou inférieur à la valeur de seuil de surface de capteur propre, dans le cas où aucune commande d'aide à la conduite n'est en cours d'exécution, et
pour déterminer que la condition d'exécution de nettoyage est satisfaite quand au moins un capteur a la surface de capteur devant être nettoyée, dans le cas où une commande d'aide à la conduite particulière parmi les commandes d'aide à la conduite est en cours d'exécution.

9. Appareil de nettoyage (11a, 11b, 11c, 11d) selon l'une quelconque des revendications 1 à 8, dans lequel le premier appareil d'éjection comprend :

une buse (51) configurée pour éjecter le fluide de nettoyage contre une surface de capteur d'une télédétection par laser avant (101) qui sert de premier capteur particulier (101) et est configurée pour obtenir de l'information de zones situées sur un côté avant, un côté latéral avant droit, et un côté latéral avant gauche, respectivement, du véhicule ; et
le deuxième appareil d'éjection comprend :

une buse (58) configurée pour éjecter le fluide de nettoyage contre une surface de capteur d'une caméra avant (204) contenue dans le deuxième groupe de capteurs (22) et configurée pour obtenir de l'information de zones situées sur le côté avant, le côté latéral avant droit, et le côté latéral avant gauche, respectivement, du véhicule,
une buse (56) configurée pour éjecter le fluide de nettoyage contre une surface de capteur d'une caméra arrière (201) contenue dans le deuxième groupe de capteurs (22) et configurée pour obtenir de l'information de zones situées sur un côté arrière, un côté latéral arrière droit, et un côté latéral arrière gauche, respectivement, du véhicule (10),
une buse (57) configurée pour éjecter le fluide de nettoyage contre une surface de capteur d'une caméra latérale droite (202) contenue dans le deuxième groupe de capteurs (22) et configurée pour obtenir de l'information de zones situées sur un côté latéral droit, un côté latéral avant droit, et un côté latéral arrière droit, respectivement, du véhicule, et
une buse (59) configurée pour éjecter le fluide de nettoyage contre une surface de capteur d'une caméra latérale gauche (204) contenue dans le deuxième groupe de capteurs (22) et configurée pour obtenir de l'information de zones situées sur un côté latéral gauche, un côté latéral avant gauche, et un côté latéral arrière gauche, respectivement, du véhicule (10).

10. Appareil de nettoyage (11a, 11b, 11c) selon la revendication 9, dans lequel le premier appareil d'éjection comprend :

une buse (52) configurée pour éjecter le fluide de nettoyage contre une surface de capteur d'un LiDAR latéral avant droite (102) contenue dans le premier groupe de capteurs (21) et configurée pour obtenir de l'information de zones situées sur le côté avant et le côté latéral avant droit, respectivement, du véhicule (10),
une buse (53) configurée pour éjecter le fluide de nettoyage contre une surface de capteur d'un LiDAR latéral arrière droite (103) contenue dans le premier groupe de capteurs (21) et configurée pour obtenir de l'information de zones situées sur le côté latéral arrière droit, le côté arrière, et le côté latéral droit, respectivement, du véhicule (10),
une buse (54) configurée pour éjecter le fluide de nettoyage contre une surface de capteur d'un LiDAR latéral arrière gauche (104) contenue dans le premier groupe de capteurs (21) et configurée pour obtenir de l'information de zones situées sur le côté latéral arrière gauche, le côté arrière, et le côté latéral gauche, respectivement, du véhicule (10), et
une buse (55) configurée pour éjecter le fluide de nettoyage contre une surface de capteur d'un LiDAR latéral avant gauche (105) contenue dans le premier groupe de capteurs (21) et configurée pour obtenir de l'information de zones situées sur le côté latéral avant gauche, le côté avant, et le côté latéral gauche, respectivement, du véhicule (10).

FIG.1

FIG.2

EP 4 043 299 B1

| OBJECT DETECTABLE DIRECTION | FIRST GROUP | SECOND GROUP | THIRD GROUP | FOURTH GROUP | FIFTH GROUP | SIXTH GROUP | SEVENTH GROUP | EIGHTH GROUP |
|---|---|---|---|---|---|---|---|---|
| | FRONT SIDE | RIGHT FRONT LATERAL SIDE | RIGHT LATERAL SIDE | RIGHT REAR LATERAL SIDE | REAR SIDE | LEFT REAR LATERAL SIDE | LEFT LATERAL SIDE | LEFT FRONT LATERAL SIDE |
| FRONT LiDAR | ● | ● | | | | | | ● |
| FRONT CAMERA | ● | ● | | | | | | ● |
| RIGHT FRONT LATERAL LiDAR | ● | ● | ● | | | | | |
| RIGHT LATERAL CAMERA | | ● | ● | ● | | | | |
| RIGHT REAR LATERAL LiDAR | | | ● | ● | ● | | | |
| REAR CAMERA | | | | ● | ● | ● | | |
| LEFT REAR LATERAL LiDAR | | | | | ● | ● | ● | |
| LEFT LATERAL CAMERA | | | | | | ● | ● | ● |
| LEFT FRONT LATERAL LiDAR | ● | | | | | | ● | ● |

FIG.3

EP 4 043 299 B1

FIG.4

FIG.5

Blocks and labels: DRIVE ASSIST ECU (80), 11b

FRONT LiDAR (101), RIGHT FRONT LATERAL LiDAR (102), RIGHT REAR LATERAL LiDAR (103), LEFT REAR LATERAL LiDAR (104), LEFT FRONT LATERAL LiDAR (105) — (21)

REAR CAMERA (201), RIGHT LATERAL CAMERA (202), FRONT CAMERA (203), LEFT LATERAL CAMERA (204) — (22)

WIPER APPARATUS (81)

FIRST NOZZLE (51), SECOND NOZZLE (52), THIRD NOZZLE (53), FOURTH NOZZLE (54), FIFTH NOZZLE (55), SIXTH NOZZLE (56), SEVENTH NOZZLE (57), EIGHTH NOZZLE (58), NINTH NOZZLE (59), TENTH NOZZLE (60)

FOURTH PUMP (44), FIFTH PUMP (45), SIXTH PUMP (46), SEVENTH PUMP (47), THIRD PUMP (43)

FOURTH ACTIVATION RELAY (74), FIFTH ACTIVATION RELAY (75), THIRD ACTIVATION RELAY (73)

CLEANING LIQUID TANK (30)

FIG.6

EP 4 043 299 B1

FIG.7

EP 4 043 299 B1

| OBJECT DETECTABLE DIRECTION | FIRST GROUP | SECOND GROUP | THIRD GROUP | FOURTH GROUP | FIFTH GROUP | SIXTH GROUP | SEVENTH GROUP | EIGHTH GROUP |
|---|---|---|---|---|---|---|---|---|
| | FRONT SIDE | RIGHT FRONT LATERAL SIDE | RIGHT LATERAL SIDE | RIGHT REAR LATERAL SIDE | REAR SIDE | LEFT REAR LATERAL SIDE | LEFT LATERAL SIDE | LEFT FRONT LATERAL SIDE |
| FRONT LiDAR | ● | ● | | | | | | ● |
| FRONT CAMERA | ● | ● | | | | | | ● |
| RIGHT LATERAL CAMERA | | ● | ● | ● | | | | |
| REAR CAMERA | | | | ● | ● | ● | | |
| LEFT LATERAL CAMERA | | | | | | ● | ● | ● |

FIG.8

EP 4 043 299 B1

START

S201

IS PUMP IN OPERATION? — N

Y

S202

DETERMINE DEGREE OF DIRTINESS OF EACH SENSOR SURFACE

S203

IS GROUP IN WHICH NUMBER OF SENSOR SURFACES WHICH ARE NOT TO-BE-CLEANED SENSOR SURFACES IS 0 PRESENT? — N

Y

S204

IS SENSOR SURFACE OF CAMERA CONTAINED IN TO-BE-CLEANED SENSOR SURFACES? — N

Y

S205

SWITCH SECOND ACTIVATION RELAY TO ON

S206

SWITCH FIRST ACTIVATION RELAY TO ON

END

FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019104365 A
- US 2020391702 A1
- EP 3466774 A1
- US 20190003895 A1
- US 20200139939 A1
- JP 2020038154 A
- WO 2020001601 A